# EUROPEAN PATENT APPLICATION

(11) **EP 4 708 723 A1**
(43) Date of publication of application: **11.03.2026**
(21) Application number: 24830478.4
(22) Date of filing: 11.06.2024
(51) Int. Cl.: H04B 7/185

(54) **NETWORK SELECTION METHOD AND SYSTEM IN SATELLITE COMMUNICATION SYSTEM AND RELATED APPARATUS**

(30) Priority: 30.06.2023 CN 202310804318
(71) Applicant: Huawei Technologies Co., Ltd., Shenzhen, Guangdong 518129 (CN)
(72) Inventor: LI, Zhenzhou, Shenzhen, Guangdong 518129 (CN); QIAN, Feng, Shenzhen, Guangdong 518129 (CN); CHEN, Jiang, Shenzhen, Guangdong 518129 (CN); WANG, Bao, Shenzhen, Guangdong 518129 (CN); SHEN, Qiuchen, Shenzhen, Guangdong 518129 (CN)
(74) Representative: Goddar, Heinz J.
(86) International application number: PCT/CN2024/098474
(87) International publication number: WO 2025/001832

(57) **Abstract**

This application discloses a network selection method in a satellite communication system, a system, and a related apparatus. A terminal may obtain satellite network selection information from a cloud server, where the satellite network selection information includes historical camping information and beam coverage information. The historical camping information includes a center frequency and a location at which the terminal successfully camps on a satellite network, and a system message of the satellite network. The beam coverage information includes a beam center location and a center frequency of each beam. The terminal camps on the center frequency of the satellite network based on the satellite network selection information. In this way, the terminal may obtain, based on a location of the terminal and location information provided by the satellite network selection information, a center frequency on which the terminal can camp at the location of the terminal. In addition, when the terminal finds, in the historical camping information, the center frequency on which the terminal can camp, the terminal may further perform a network camping operation based on the system message in the historical camping information, and the terminal does not need to receive a system message from a satellite, so that time for the terminal to obtain the system message is saved, the terminal can access the satellite network more quickly, and communication efficiency is improved.

## Description

This application claims priority to Chinese Patent Application No. 202310804318.4, filed with the China National Intellectual Property Administration on June 30, 2023 and entitled "NETWORK SELECTION METHOD IN SATELLITE COMMUNICATION SYSTEM, SYSTEM, AND RELATED APPARATUS", which is incorporated herein by reference in its entirety.

### TECHNICAL FIELD

This application relates to the field of satellite communication, and in particular, to a network selection method in a satellite communication system, a system, and a related apparatus.

### BACKGROUND

Currently, most terminals support satellite communication. The terminals may implement, through satellites, communication in areas that are not covered by mobile communication, or that cannot be covered by mobile communication, or in which communication systems are damaged, such as oceans, deserts, grasslands, high-altitude areas, or no-man's land.

A satellite may cover a ground by using different beams, and a terminal may be covered by a plurality of beams at a same moment. The terminal may receive signals of a plurality of satellites at a same moment. In this case, the terminal needs to select a center frequency, and camp on a satellite. After the terminal successfully camps on the satellite, the terminal may communicate with another terminal through the satellite. To successfully camp on a satellite network, the terminal needs to receive system data delivered by the satellite network. Due to a narrow bandwidth for data transmission in the satellite network, it takes longer time for the terminal to receive a system message transmitted through satellite narrowband transmission, increasing network selection duration.

### SUMMARY

This application provides a network selection method in a satellite communication system, a system, and a related apparatus. A terminal obtains satellite network selection information from a server, where the satellite network selection information includes but is not limited to historical camping information and beam coverage information. The historical camping information includes a center frequency and a location at which the terminal successfully camps on a satellite network, and a system message of the satellite network. The beam coverage information includes a beam center location and a center frequency of each beam. The terminal camps on the center frequency of the satellite network based on the satellite network selection information. In this way, the terminal obtains, based on a location of the terminal and location information provided by the satellite network selection information, a center frequency on which the terminal can camp at the location of the terminal. In addition, when the terminal finds, in the historical camping information, a center frequency on which the terminal can camp, the terminal may further perform a network camping operation based on the system message in the historical camping information, and the terminal does not need to receive a system message from a satellite, so that time for the terminal to obtain the system message is saved, the terminal can access the satellite network more quickly, and communication efficiency is improved.

According to a first aspect, this application provides a network selection method in a satellite communication system, including: A terminal obtains location information of the terminal after disconnecting from a cellular network; the terminal determines, based on the location information of the terminal and historical camping information of a satellite network, M historical camping information items in the historical camping information, where the historical camping information includes a plurality of historical camping information items, the historical camping information item includes location information of camping on the satellite network, a camping center frequency of the satellite network, and a system message of the satellite network, distances between locations that are of camping on the satellite network and that are in the M historical camping information items and a location of the terminal are less than a first distance, and M is greater than or equal to 1; and the terminal camps on the satellite network based on system messages and camping center frequencies in the M historical camping information items.

In this way, the terminal camps on the satellite network based on the system message and the camping center frequency in the historical camping information item, and does not need to receive the system message of the satellite network again, so that network camping duration is reduced.

In a possible implementation, the method further includes: Before disconnecting from the cellular network, the terminal obtains the historical camping information of the satellite network from a server through the cellular network and/or a wireless local area network. In this way, the terminal obtains the historical camping information from the server through the cellular network and/or the wireless local area network, so that the terminal does not need to obtain the system message in the satellite network, and time for receiving the system message in the satellite network by the terminal is reduced.

In a possible implementation, the M historical camping information items include a first historical camping information item; and the method further includes: The terminal displays a first interface, where the first interface includes a satellite corresponding to the first historical camping information item, and a pitch angle deviation and an azimuth deviation between a radiation direction of an antenna in the terminal and a satellite transmission link direction, and the satellite transmission link direction is a direction from the location in which the terminal is located to a location in which the satellite is located; the terminal receives a first input for adjusting a posture of the terminal; and when the terminal determines that the radiation direction of the satellite antenna is aligned with a target satellite, the terminal camps on the satellite network based on a first system message and a first camping center frequency in the first historical camping information item. In this way, the terminal displays the first interface used to prompt the user to align the radiation direction of the antenna in the terminal with the satellite transmission link direction, to improve quality of a satellite signal received by the terminal, so that the terminal successfully camps on the satellite network.

In a possible implementation, the method further includes: After successfully camping on the satellite network, the terminal display a second interface, where the second interface includes a dialing button used to make a satellite call. In this way, after successfully camping on the satellite network, the terminal provides the user with the second interface including the dialing station, so that a call link can be established with another terminal through the satellite network.

In a possible implementation, the M historical camping information items include the first historical camping information item and a second historical camping information item; and that the terminal camps on the satellite network based on the system messages and the camping center frequencies in the M historical camping information items specifically includes: If the terminal fails to camp on the satellite network based on the first system message and the first center frequency in the first historical camping information item, the terminal camps on the satellite network based on a second system message and a second center frequency in the second historical camping information item. In this way, after the terminal fails to camp on the satellite network based on the first historical camping information item, the terminal camps on the satellite network based on the second historical camping information item.

In a possible implementation, the historical camping information item includes time at which the server receives data of the historical camping information item, and time at which the server receives data of first historical camping information and that is in the first historical camping information item is closer to system time of the terminal than time at which the server receives data of first historical camping information and that is in the second historical camping information item.

In a possible implementation, the historical camping information item includes time at which the terminal successfully camps on the satellite network, and time at which the terminal successfully camps on the satellite network and that is in the first historical camping information item is closer to the system time of the terminal than time at which the terminal successfully camps on the satellite network and that is in the second historical camping information item.

In a possible implementation, the method further includes: If the terminal fails to camp on the satellite network based on the system messages and the camping center frequencies in the M historical camping information items, receiving a system message delivered by the satellite network; and camping on the satellite network based on the system message delivered by the satellite network and the camping center frequencies in the M historical camping information items.

In a possible implementation, the system message includes a first-type message, a second-type message, a third-type message, and a fourth-type message, the first-type message includes a version number of the second-type message and a version number of the third-type message, and the second-type message includes a version number of the fourth-type message; and receiving the system message delivered by the satellite network specifically includes:

After the terminal receives the first-type message delivered by the satellite network, if the terminal determines, based on the system message in the historical camping information item and the first-type message delivered by the satellite network, that a version number of a second-type message in the historical camping information item is different from the version number of the second-type message in the first-type message delivered by the satellite network, the terminal receives the second-type message delivered by the satellite network;

if the terminal determines, based on the system message in the historical camping information item and the first-type message delivered by the satellite network, that a version number of a third-type message in the historical camping information item is different from the version number of the third-type message in the first-type message delivered by the satellite network, the terminal receives the third-type message delivered by the satellite network; and

after the terminal receives the second-type message delivered by the satellite network, if the terminal determines, based on the system message in the historical camping information item and the second-type message delivered by the satellite network, that a version number of a fourth-type message in the historical camping information item is different from the version number of the fourth-type message in the second-type message delivered by the satellite network, the terminal receives the fourth-type message delivered by the satellite network. In this way, the terminal only needs to receive different system messages, so that duration of receiving the system messages is reduced.

In a possible implementation, the historical camping information item includes time of the camping center frequency; and a time difference between time of the camping center frequencies in the M historical camping information items and system time of the terminal is less than a preset time difference. In this way, when the time difference between the system message in the historical camping information item and the system time exceeds the preset time difference, it indicates that the time of the historical camping information item is far away from the system time, and may be different from the system message of the satellite network. A probability that the terminal successfully camps on the satellite network based on the historical camping information item is low, and the historical camping information item may be directly skipped. The terminal first camps on the satellite network based on a historical camping information item with closer time, so that a probability of successfully camping on the satellite network is increased.

In a possible implementation, the M historical camping information items include the first historical camping information item and the second historical camping information item; the historical camping information item further includes a beam coverage center location; and the method further includes: when a distance between the location of the terminal and a beam coverage center location corresponding to the first historical camping information item is greater than a preset coverage distance, failing, by the terminal, to camp on the satellite network based on the first historical camping information item, and determining whether a distance between the location of the terminal and a beam coverage center location corresponding to the second historical camping information item is less than the preset coverage distance; and when the distance between the location of the terminal and the beam coverage center location corresponding to the second historical camping information item is less than the preset coverage distance, camping on the satellite network based on the second historical camping information item. In this way, when the distance between the location of the terminal and the beam coverage center location corresponding to the historical camping information item is greater than the preset coverage distance, a coverage area of a beam corresponding to the historical camping information item does not include the location of the terminal, and the terminal skips the historical camping information, and determines whether a coverage area of a beam corresponding to a next historical camping information item includes the location of the terminal. The terminal can successfully camp on the satellite network only based on a historical camping information item in which a coverage area of a beam includes the location of the terminal.

In a possible implementation, the historical camping information item further includes a satellite identity, and coverage areas of beams corresponding to satellite identities in the M historical camping information items include the location of the terminal.

In a possible implementation, the terminal determines the satellite transmission link direction based on the satellite identity and ephemeris information of the satellite network.

In a possible implementation, the historical camping information item further includes a public land mobile network PLMN, and PLMNs in the M historical camping information items belong to a PLMN provided by an operator for a subscriber identity module SIM card of the terminal. In this way, the terminal determines, based on the PLMN in the historical camping information item, whether the terminal can access the PLMN.

In a possible implementation, the method further includes: if the terminal fails to camp on the camping center frequencies in the M historical camping information items, determining, based on the location information of the terminal and beam coverage information of the satellite network, N beam coverage information items in the beam coverage information, where the beam coverage information includes a plurality of beam coverage information items, and the beam coverage information item includes a beam center location and a camping center frequency; and distances between beam center locations in the N beam coverage information items and the location of the terminal are less than a second distance, and N is greater than or equal to 1; and camping, by the terminal, on the satellite network based on camping center frequencies of the N beam coverage information items. In this way, after the terminal fails to camp on the satellite network based on the historical camping information item, the terminal camps on the satellite network based on the beam coverage information item.

In a possible implementation, the method further includes: Before disconnecting from the cellular network, the terminal obtains the beam coverage information of the satellite network from the server through the cellular network and/or the wireless local area network. In this way, the terminal does not need to search in the satellite network through a full frequency band, to obtain a center frequency on which the terminal can camp.

In a possible implementation, the N beam coverage information items include a first beam coverage information item; and that the terminal camps on the satellite network based on the camping center frequencies of the N beam coverage information items specifically includes: The terminal receives a third system message of the satellite network at a third center frequency of the first beam coverage information item; and the terminal camps on the satellite network based on the third system message.

In a possible implementation, the method further includes: If the terminal fails to camp on the camping center frequencies of the N beam coverage information items, the terminal camps on the satellite network based on a preset center frequency information list, where the preset center frequency information list includes a plurality of center frequencies of the satellite network.

In a possible implementation, the method further includes: The terminal stores location information of the terminal, a camping center frequency of the terminal, and a system message received by the terminal when the terminal successfully camps on the satellite network; and after accessing the cellular network or the wireless local area network, the terminal, sends, to the server, the location information of the terminal, the camping center frequency of the terminal, and the system message received by the terminal when the terminal successfully camps on the satellite network. In this way, after accessing the cellular network and/or the wireless local area network, the terminal sends, to the server, stored data of successfully camping on the satellite network, and the server may obtain data that is of camping on the satellite network and that is sent by all terminals successfully camping on the satellite network. The server may further send the historical camping information to all terminals that have enabled a satellite communication service, so that the terminals can camp on the satellite network more quickly based on the historical camping information.

According to a second aspect, this application provides a communication apparatus, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the communication apparatus is enabled to perform the method according to any one of the possible implementations of the first aspect. The communication apparatus may be a terminal or a device in another product form.

According to a third aspect, this application provides a computer storage medium, including computer instructions. When the computer instructions are run on a computer, the computer is enabled to perform the method according to any one of the possible implementations of the first aspect.

According to a fourth aspect, this application provides a chip or a chip system, used in a terminal and including a processing circuit and an interface circuit. The interface circuit is configured to: receive code instructions, and transmit the code instructions to the processing circuit. The processing circuit is configured to run the code instructions to perform the method according to any one of the possible implementations of the first aspect.

### BRIEF DESCRIPTION OF DRAWINGS

FIG. 1 is a diagram of a satellite network selection procedure according to an embodiment of this application;
FIG. 2 is a diagram of a communication system 10 according to an embodiment of this application;
FIG. 3 is a schematic flowchart of a network selection method in a satellite communication system according to an embodiment of this application;
FIG. 4A to FIG. 4G are diagrams of a group of interfaces according to an embodiment of this application; and
FIG. 5 is a diagram of a hardware structure according to an embodiment of this application.

### DESCRIPTION OF EMBODIMENTS

The technical solutions according to embodiments of this application are clearly and completely described in the following with reference to the accompanying drawings. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes a network selection procedure. After a terminal 100 enables a satellite communication function, the terminal 100 needs to search for an appropriate center frequency as soon as possible and camp on the center frequency. A process from initiating, by the terminal 100, a center frequency search to camping on the appropriate center frequency may be referred to as a satellite network selection procedure of the terminal 100. The terminal 100 may search for a nearby satellite network based on a preset center frequency list. After adjusting a receive frequency to a broadcast channel (broadcast channel, BCH) corresponding to the center frequency, the terminal 100 may perform a frequency correction operation and a frame alignment operation based on a received broadcast message. After performing the frequency correction operation and the frame alignment operation, the terminal 100 receives a system message corresponding to the center frequency. The terminal 100 may select an appropriate public land mobile network (public land mobile network, PLMN) based on the system message, and camp on the PLMN. The PLMN may be used to distinguish between networks provided by different operators or different networks provided by a same operator. In this way, after camping on an appropriate network, the terminal 100 may communicate with another terminal through a satellite.

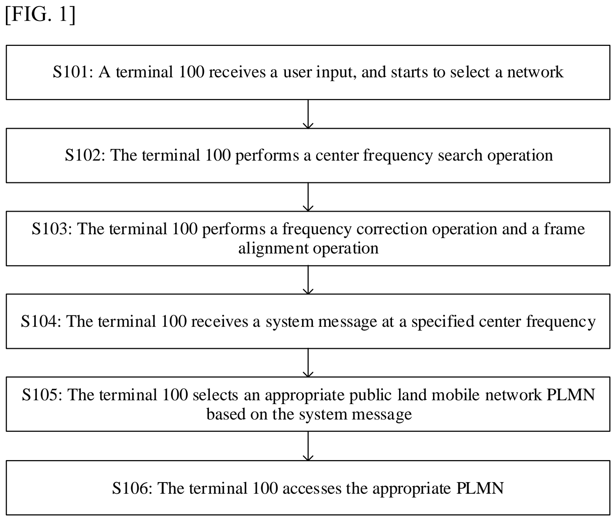

For example, as shown in FIG. 1, the satellite network selection procedure performed by the terminal 100 includes the following steps:
S101: The terminal 100 receives a user input, and starts to select a network.

In some examples, when a power button of the terminal 100 is not triggered, the terminal 100 is in a power-off state. When a user presses the power button of the terminal 100, the terminal 100 may be powered on in response to a press operation of the user on the power button. After being powered on, the terminal 100 may start to perform the satellite network selection procedure.

In some other examples, the terminal 100 is in a flight mode. In the flight mode, the terminal 100 stops communicating with a wireless communication network (for example, a cellular network or a satellite network). After receiving an input of disabling the flight mode by the user, the terminal 100 may start to perform the satellite network selection procedure in response to the input.

In some other examples, the terminal 100 provides a satellite communication function. After receiving an input of enabling the satellite communication function by the user, the terminal 100 may enable the satellite communication function in response to the input, and start to perform the satellite network selection procedure. It should be noted that, the terminal 100 is not limited to enabling the satellite communication function after receiving the input of enabling the satellite communication function by the user. Alternatively, the terminal 100 may enable the satellite communication function after being powered on, after the flight mode is disabled, or when no cellular network signal is detected within preset duration. This is not limited in this embodiment of this application.

It should be noted that the foregoing case is not limited. For example, the terminal 100 may further start to perform the satellite network selection procedure when detecting that a card slot of the terminal 100 is connected to a subscriber identity module card (subscriber identity module, SIM). This is not limited in this embodiment of this application.

In some other examples, the terminal 100 is not limited to starting network selection after receiving a user input. Alternatively, the terminal 100 may start to perform the satellite network selection procedure when no cellular network signal is detected within preset duration (for example, 3 minutes).

S102: The terminal 100 performs a center frequency search operation.

A center frequency information list is preset in the terminal 100. The center frequency information list may include but is not limited to information like a beam center location of a beam, a center frequency, and a deviation (a start location) of a downlink frame at a physical layer. Herein, the center frequency information list includes information about a specified center frequency. The terminal 100 may use each center frequency in the preset center frequency information list as a receive frequency range of the terminal 100. The terminal 100 may receive a satellite message within the frequency range.

One center frequency information list may include information about one beam and an adjacent beam of the beam. A plurality of center frequency information lists may be preset in the terminal 100. The terminal 100 may use, based on a location of the terminal 100 and the beam center location of the beam in the center frequency information list, a center frequency information list corresponding to a beam center location closest to the location of the terminal 100.

Before switching from another wireless network (for example, a cellular network) to the satellite network, the terminal 100 may obtain the center frequency information list of the satellite network through the another wireless network.

In some examples, after the terminal 100 camps on a network under a beam of the satellite network, the terminal 100 may be disconnected from the network. For example, the terminal 100 is disconnected from the network due to a poor beam signal, or deviation of an antenna radiation direction of the terminal 100 from a satellite beam direction. When the terminal 100 camps on the network again, the terminal 100 may camp on the beam again based on the center frequency information list obtained when the terminal 100 camps on the network in the satellite network.

S103: The terminal 100 performs a frequency correction operation and a frame alignment operation.

When the terminal 100 may adjust the receive frequency range to the frequency range of the specified center frequency, the terminal 100 may receive the broadcast message sent by the satellite on the broadcast channel of the specified center frequency. The terminal 100 corrects the receive frequency of the terminal 100 based on the received broadcast message and performs the frame synchronization operation, so that the terminal 100 can receive a communication frame delivered by the satellite at the specified center frequency. The broadcast channel includes a frequency correction channel (frequency correction channel, FCCH), a synchronizing channel (synchronizing channel, SCH), and the like. The terminal 100 may adjust, based on a frequency correction signal received on the FCCH, the receive frequency range of the terminal 100 to the frequency range for receiving the satellite signal at the specified center frequency. The terminal 100 may further adjust, based on a frame synchronization signal received on the SCH, a time point for receiving the communication frame sent by the satellite at the center frequency.

S104: The terminal 100 receives a system message at a specified center frequency.

After performing step S103, the terminal 100 may receive the system message delivered by the satellite at the specified center frequency. The system message may be used by the terminal 100 to determine whether the specified center frequency is suitable for camping on. The system message may include but is not limited to a satellite identity (identity, ID), a satellite location, satellite beam information, a satellite beam center location, a satellite center frequency list, and the like. The satellite beam information may indicate a PLMN provided by the satellite at the center frequency. After parsing the system message, the terminal 100 may perform a subsequent camping procedure based on information obtained through parsing.

S105: The terminal 100 selects an appropriate PLMN based on the system message.

The terminal 100 may determine, based on the system message, whether there is an appropriate PLMN at the specified center frequency. If the terminal 100 determines that there is an appropriate PLMN at the specified center frequency, the terminal 100 may perform step S105 to camp on the specified center frequency and access the appropriate PLMN. If the terminal 100 determines that there is no appropriate PLMN at the specified center frequency, the terminal 100 may perform step S102 to step S105 again until the terminal 100 finds an appropriate PLMN.

The appropriate PLMN may be a PLMN provided by an operator to which an SIM card of the terminal 100 belongs, or may be a PLMN provided by another operator that has a cooperation relationship with the operator that provides the SIM card, or the like.

S106: The terminal 100 accesses the appropriate PLMN.

After detecting, based on the system message, that there is an appropriate PLMN at the specified center frequency, the terminal 100 may camp on the specified center frequency, and access the appropriate PLMN based on the system message.

In some examples, after the terminal 100 fails to camp on all center frequencies in the preset center frequency information list based on step S102 to step S105, the terminal 100 may re-camp on a center frequency in the preset center frequency information list. Before the terminal 100 successfully camps on the center frequency, the terminal 100 may repeat a total of N rounds of operations of camping on the center frequency in the preset center frequency information list, where N is greater than or equal to 1. After the terminal 100 performs N rounds of repeated searches for a center frequency in the preset center frequency information list, if the terminal 100 fails to camp on any center frequency, the terminal 100 may search all frequency bands of the satellite network for a center frequency on which the terminal 100 can camp. In this way, if the user holds the terminal 100 in an inappropriate posture, for example, there is a deviation between the antenna radiation direction and the beam direction of the terminal 100 due to arm shaking of the user, the terminal 100 cannot receive a stable satellite signal, and consequently the terminal 100 fails to camp on a network, the terminal 100 may repeatedly perform network selection a plurality of times, to increase a probability that the terminal 100 successfully camps on a center frequency. If a satellite signal received by the terminal 100 is unstable due to impact of a surrounding environment, the terminal 100 may fail to camp on a network. After leaving this area, the terminal 100 may reselect a network based on the preset center frequency information list, so that the terminal 100 can successfully camp on the network. For example, when the terminal 100 is in a scenario (for example, a wood or a cave) in which a signal is blocked, a network camping failure may occur. After moving from a blocked area to an open area, the terminal 100 may continue to perform network selection based on the center frequency information list, to ensure that the terminal 100 can successfully camp on a network. The terminal 100 may perform N rounds of repeated searches for a center frequency in the preset center frequency information list, to increase a probability of successfully camping on the center frequency.

In this process, if the terminal 100 does not store a preset center frequency information list, or when center frequency information on a satellite network side changes (for example, a new center frequency is added on the network side), the terminal 100 cannot find an appropriate center frequency based on the center frequency information list. The terminal 100 needs to sequentially scan at least one frequency band supported by the terminal 100 until an appropriate center frequency is found. The terminal 100 may search all frequency bands for a center frequency on which the terminal 100 can camp. For a single frequency band, the terminal 100 needs to search for all center frequencies in a center frequency search range defined by the frequency band. Consequently, search time is long, and user communication efficiency is affected. In addition, in the satellite network, to make a signal transmission distance longer, a data transmission bandwidth is narrow. It takes longer time for a satellite to transmit a system message through a narrowband, and consequently network selection time is increased.

The following describes a communication system 10 according to embodiments of this application.

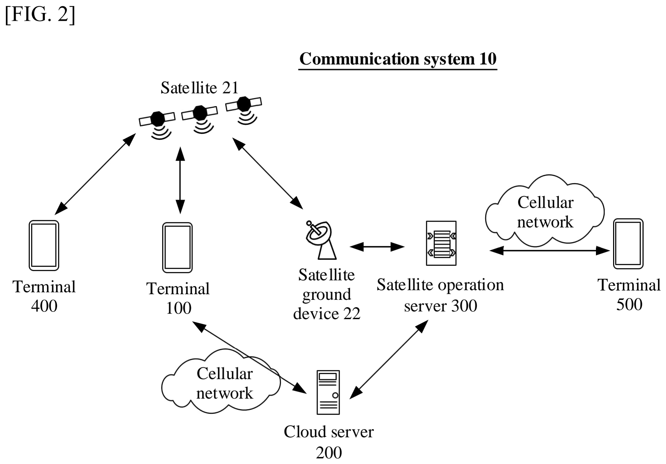

As shown in FIG. 2, the communication system 10 may include but is not limited to a terminal (for example, a terminal 100 and a terminal 400) in a satellite network, a terminal (for example, a terminal 500) in a cellular network, a satellite 21, a satellite ground device 22, a cloud server 200, and a satellite operation server 300. The network selection method provided in embodiments of this application may be applied to the terminal in the satellite network.

The terminal 100 may send a satellite message to the terminal 500 through the cellular network. Specifically, the terminal 100 may first send the satellite message to the satellite 21, and the satellite 21 performs only relay, and may directly forward, to the satellite ground device 22 on a ground, the satellite message sent by the terminal 100. The satellite ground device 22 may send the satellite message to the satellite operation server 300. The satellite operation server 300 may parse the satellite message from the terminal 100, and forward content in the satellite message to the terminal 500 through the cellular network. Similarly, the terminal 500 in the cellular network may also send a satellite message to the terminal 100 in the satellite network. The terminal 500 may send the satellite message to the satellite operation server 300 through the cellular communication network. The satellite operation server 300 may store the satellite message from the terminal 500. After detecting that the terminal 100 accesses the satellite network, the satellite operation server 300 may send the satellite message to the terminal 100 in the satellite network via the satellite ground device 22 and the satellite 21.

The terminal 100 may also send a satellite message to the terminal 400 in the satellite network. Specifically, the terminal 100 may forward, via the satellite 21 and the satellite ground device 22 to the satellite operation server 300 on a ground, the satellite message sent by the terminal 100. The satellite operation server 300 may store the satellite message from the terminal 100. After detecting that the terminal 100 accesses the satellite network, the satellite operation server 300 may send the satellite message from the terminal 100 to the terminal 400 in the satellite network via the satellite ground device 22 and the satellite 21. Similarly, the terminal 400 in the satellite network may also send a satellite message to the terminal 100 in the satellite network.

The satellite ground device 22 may include one or more devices having a sending function and one or more devices having a receiving function, or may include one or more devices having a sending function and a receiving function. This is not limited herein. The satellite ground device 22 may further include one or more devices having a data processing function of a satellite communication protocol stack, and may be configured to encapsulate or parse user data based on the satellite protocol stack.

The satellite operation server 300 may be configured to provide a satellite communication service for a terminal. The satellite operation server 300 may be configured to provide a system message including data like a beam center location, a center frequency, and a PLMN.

In this embodiment of this application, the terminal that successfully camps on the satellite network may communicate with another terminal through the satellite network. After returning to the cellular network, the terminal that camps on the satellite network may send, to the cloud server 200, historical camping information in a process of performing the procedure of camping on the satellite network. For example, the historical camping information may include a location of the terminal when the terminal camps on the network, and data such as a center frequency on which the terminal camps and a system message received by the terminal at the center frequency. The cloud server 200 may further obtain beam coverage information from the satellite operation server 300. For example, the beam coverage information may include a beam center location of a satellite beam and a center frequency of the beam.

The cloud server 200 may send the historical camping information and the beam coverage information to a terminal that enables a satellite communication service at a location provided by the satellite operation server 300. The cloud server 200 may send, at an interval of preset duration, the historical camping information and the beam coverage information to the terminal that enables the satellite communication service. Alternatively, after updating data of the historical camping information and the beam coverage information, the cloud server 200 may send updated data to the terminal that enables the satellite communication service. In this way, the terminal may camp on a center frequency more quickly based on the historical camping information and/or the beam coverage information, and communicate with another terminal through the satellite network.

In some examples, the cloud server 200 may send updated partial data to the terminal that enables the satellite communication service, and send an identifier of invalid data to the terminal. In this way, communication resources between the cloud server 200 and the terminal can be saved.

The cloud server 200 may obtain, at an interval of preset duration (for example, 10 minutes), the historical camping information from the terminal that is in the cellular network and that enables the satellite communication service. Alternatively, the terminal that enables the satellite communication service may send the historical camping information to the cloud server 200 when switching from the satellite network to the cellular network. Similarly, the cloud server 200 may obtain the beam coverage information from the satellite operation server 300 at an interval of preset duration (for example, 10 minutes). Alternatively, after updating the beam coverage information, the satellite operation server 300 may send updated beam coverage information to the cloud server 200. This is not limited in this embodiment of this application.

In some examples, the cloud server 200 may obtain camping network information of a center frequency on which camping succeeds from each terminal, store M pieces of latest camping network information, and use the stored M pieces of latest camping network information as the historical camping information, where M is greater than 1. The server 200 may send the historical camping information to the terminal in the cellular network. In this way, although the satellite network side updates information like a center frequency and a system message, because the terminal may obtain latest historical camping information in the cellular network, when the terminal needs to send/receive information through the satellite, the terminal may successfully perform a network camping procedure based on the latest historical camping information.

In some other examples, the cloud server 200 may obtain camping network information of a center frequency on which camping succeeds from each terminal, and store camping network information within latest preset duration (for example, one day). In this way, although the satellite network side updates partial data, because the cloud server 200 also sends the latest historical camping information to the terminal in the cellular network, a probability that the terminal obtains valid camping network information can be increased.

In some examples, to enable the terminal 100 to search, at any location based on the historical camping information, for a center frequency on which the terminal 100 can camp, the cloud server 200 may retain at least one piece of network camping information on each beam of each satellite.

An embodiment of this application provides a network selection method in a satellite communication system. A terminal 100 may obtain satellite network selection information from a cloud server 200 in a cellular network. The satellite network selection information may include but is not limited to historical camping information and beam coverage information. The historical camping information is information provided by a terminal that successfully camps on a center frequency in a satellite network. The historical camping information includes a center frequency on which the terminal camps, a location at which the terminal camps on the center frequency, and a system message received by the terminal during camping. The beam coverage information may include a beam center location and center frequency information of each beam of each satellite. The terminal 100 may camp on the center frequency of the satellite network based on the satellite network selection information. In this way, the terminal 100 may more quickly obtain, based on the location of the terminal 100 and location information provided by the satellite network selection information, a center frequency on which the terminal 100 can camp at the location of the terminal 100. In addition, when the terminal 100 finds, in the historical camping information, a center frequency on which the terminal 100 can camp, the terminal 100 may further perform a network camping operation based on the system message in the historical camping information, and the terminal 100 does not need to receive a system message from a satellite, so that time for the terminal 100 to obtain the system message is saved, the terminal 100 can access the satellite network more quickly, and communication efficiency is improved.

It should be noted that, when the terminal 100 fails to camp on the network based on the historical camping information and the beam coverage information, the terminal 100 may perform an operation of camping on a neighboring center frequency. Specifically, before the terminal 100 successfully camps on the center frequency, the terminal 100 sequentially performs an operation of camping on a center frequency adjacent to a center frequency on which the terminal fails to camp in the historical camping information, and an operation of camping on a center frequency adjacent to a center frequency on which the terminal fails to camp in the beam coverage information. The adjacent center frequency is one or more center frequencies that are in all frequency bands and that are adjacent to a frequency range of the center frequency. If the terminal 100 fails to camp on the adjacent center frequency, the terminal 100 may perform the network selection procedure shown in FIG. 1. Alternatively, when the terminal 100 fails to camp on a network based on both the historical camping information and the beam coverage information, the terminal 100 may perform the network selection procedure shown in FIG. 1.

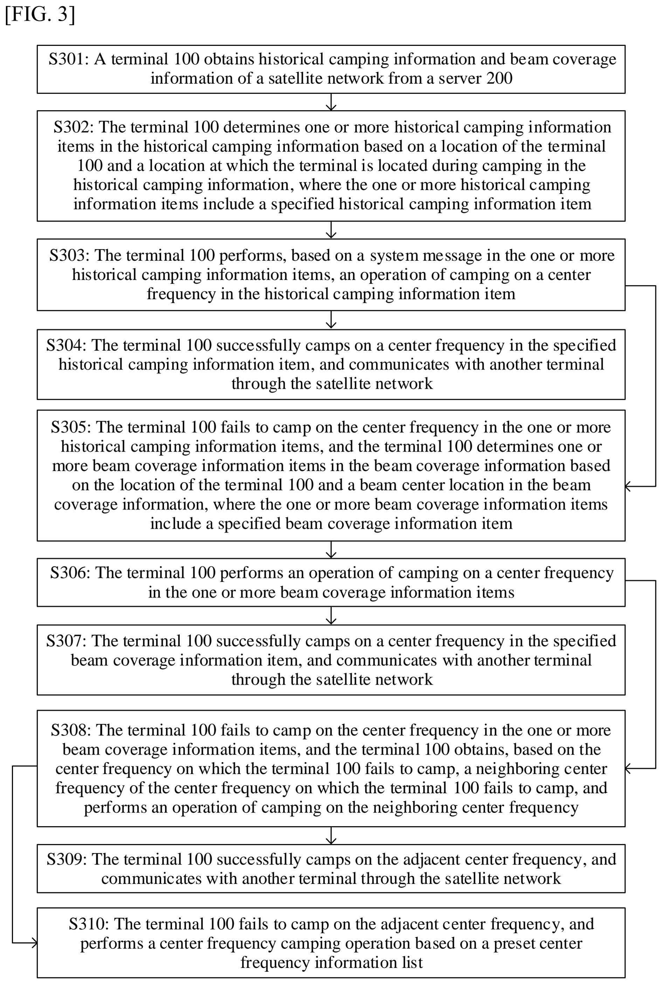

Specifically, as shown in FIG. 3, the network selection method in a satellite communication system includes the following steps.

S301: A terminal 100 obtains historical camping information and beam coverage information of a satellite network from a server 200.

In some examples, the terminal 100 may obtain the historical camping information and the beam coverage information of the satellite network from the server 200 through a wireless communication network, for example, a cellular network or a wireless fidelity (wireless fidelity, Wi-Fi) network.

The historical camping information includes one or more historical camping information items, and the historical camping information item may include but is not limited to camping center frequency information, location information of a camping location, and a system message. The location information of the camping location indicates a location at which the terminal that provides the historical camping information item is located when the terminal successfully camps on the satellite network, the camping center frequency information indicates a center frequency on which the terminal that provides the historical camping information item camps, and the system message is a system message received by the terminal during a period in which the terminal camps on the satellite network.

The terminal 100 may search the historical camping information for a historical camping information item in which the location at which the terminal camps on the center frequency is closest to the location of the terminal 100, and camp on the center frequency of the historical camping information item based on a system message of the historical camping information item.

The system message is a broadcast message provided by a satellite operation server 300, and may notify each terminal of how to access the satellite network. The satellite operation server 300 provides four types of system messages. The four types of system messages include a system message class 1, a system message class 2, a system message class 3, and a system message class 4.

The system message class 1 may include one or more segments, and the one or more segments may include but are not limited to a segment 1A (segment 1A). The segment 1A includes version information of the system message class 2 and version information of the system message class 3.

The version information of the system message class 2 and the version information of the system message class 3 respectively indicate version numbers of the system message class 2 and the system message class 3, and the version numbers may indicate whether the satellite operation server 300 updates the system message class 2 and the system message class 3. The system message class 2 is used as an example. When the version number of the system message class 1 received by the terminal 100 is the same as the version number of the system message class 2 in the terminal 100, the system message class 1 may indicate that the system message class 2 corresponding to the version number is not updated, and the terminal 100 may continue to use the system message class 2. When the version number of the system message class 1 received by the terminal 100 is different from the version number of the system message class 2 in the terminal 100, the system message class 1 may indicate that the system message class 2 is updated, and the terminal 100 cannot continue to use the system message class 2, and needs to receive the system message class 2 corresponding to the version number again. Similarly, the terminal 100 may also determine, based on the version number of the class 3 in the system message class 1, whether the system message class 3 is updated.

The segment 1A may further include an access control parameter. For example, the access control parameter may include a random access channel (random access channel, RACH) access parameter, and the RACH access parameter may be used by the terminal 100 to perform an access synchronization operation before random access. The terminal 100 may maintain uplink frequency synchronization and uplink frame synchronization with the satellite network based on the RACH access parameter.

Before performing a network selection operation, the terminal 100 needs to obtain the system message class 1, or after camping on a center frequency, the terminal 100 needs to obtain the system message class 1 at the center frequency at an interval of preset duration.

The system message class 2 may include one or more segments, and the one or more segments may include but are not limited to a segment 2Abis (segment 2Abis) and a segment 2Bbis (segment 2Bbis). "bis" may indicate a type of a message, and a segment whose name includes "bis" may be understood as supplementary information of a message segment. The segment 2Abis may include but is not limited to synchronization information, location area (location area, LA) information, and version information of the system message class 4. The synchronization information may indicate how the terminal maintains downlink synchronization with the satellite network side, and the downlink synchronization may include downlink frequency synchronization and downlink frame synchronization. The LA information may be used to configure a paging group. The version information of the system message class 4 indicates a version number of the system message class 4, and the version number may indicate whether the satellite operation server 300 updates the system message class 4. For details, refer to the foregoing embodiment. Details are not described herein again. The segment 2Bbis may include but is not limited to broadcast control channel (broadcast control channel, BCCH) neighboring cell list information. The BCCH neighboring cell list information may include a broadcast message of an adjacent beam. The BCCH neighboring cell list information may be used to measure signal quality of an adjacent beam. When determining, based on the segment 2Bbis, that signal quality of an adjacent beam is stronger than signal quality of a current beam, the terminal 100 may camp on a center frequency of the adjacent beam. When the historical camping information of the terminal 100 includes a historical camping information item of the adjacent beam, the terminal 100 may camp on the center frequency of the adjacent beam based on the historical camping information item. When the historical camping information of the terminal 100 does not include the historical camping information item of the adjacent beam, the terminal 100 may camp on the center frequency of the adjacent beam based on information (for example, a center location parameter of the adjacent beam provided in the system message class 3, and a center frequency information list provided in the system message class 4) about the adjacent beam provided in the system message.

The system message class 3 may include one or more segments, and the one or more segments may include but are not limited to a segment 3A (segment 3A), a segment 3Bbis (segment 3Bbis), a segment 3C/3D/3E/3F/3G (segment 3C/3D /3E/3F/3G), a segment 3I, and a segment 3Jbis. The segment 3A may include but is not limited to a satellite ID, a satellite location, and a beam center location. The segment 3A may notify the terminal 100 of related information of a current beam. The segment 3Bbis may include but is not limited to a concurrent BCCH information table. The BCCH information table may include but is not limited to a BCCH center frequency, a satellite ID, a PLMN, a beam ID, and the like. The center frequency in the historical camping information stored by the terminal 100 is a BCCH center frequency, and is used by the terminal 100 to perform an operation of camping on the satellite network. The segment 3Bbis may indicate a correspondence between a beam and a PLMN. The segment 3C/3D/3E/3F/3G may include but is not limited to common control channel (common control channel, CCCH) channel information and physical common control channel (physical common control channel, PCCCH) channel information. The segment may be used to enable, in a call phase, the terminal 100 to transmit, through a PCCCH channel, control information and information required for a link connection. The segment 3I may include but is not limited to LA information, and is used for protocol-related timeout timer configuration. The segment 3Jbis includes a center location parameter of an adjacent beam, and is used by the terminal 100 to calculate a delay between the terminal 100 and the satellite when the terminal 100 performs a beam reselection operation, so that the terminal 100 can be synchronized with the satellite.

The system message class 4 may include one or more segments, and the one or more segments may include but are not limited to a segment 4A (segment 4A), a segment 4B (segment 4B), ..., a segment 4J (segment 4J), and a segment 4K (segment 4K). The segment 4A to the segment 4K may include but are not limited to a radio link counter and a system center frequency information list. When performing network selection, the terminal 100 may search for a center frequency based on the system center frequency list. In the network selection procedure shown in FIG. 1, the preset center frequency information list used by the terminal 100 is the system center frequency information list in the system message class 4.

It should be noted that the foregoing system message type division, segment composition of each type of system message, segment names, and the like are merely examples, and should not constitute a limitation on a specific component of the system message.

Optionally, the historical camping information item may further include a beam center location. Because the terminal that provides the historical camping information may successfully camp on the center frequency of the beam at an edge location of a coverage area of a beam, if only the distance between the terminal 100 and the location at which the terminal successfully camps on the satellite network in the historical camping information item is considered, the terminal 100 may not be in the coverage area of the beam corresponding to the historical camping information, and the terminal cannot camp on the center frequency. The beam center location in the historical camping information item may be used to help the terminal 100 determine whether the terminal 100 is in the beam area, to avoid a case in which the terminal 100 camps on an inappropriate center frequency. For example, a coverage area of each beam may be determined by a beam center location and a beam radius. A preset coverage distance may be set for the terminal 100, and the preset coverage distance is less than or equal to beam radiuses of all beams in the satellite network. When the distance between the location of the terminal 100 and the beam center location in the historical camping information item is less than the preset coverage distance, the terminal 100 determines that the terminal 100 is located in the beam area of the beam corresponding to the historical camping information item. When the distance between the location of the terminal 100 and the beam center location in the historical camping information item is greater than the preset coverage distance, the terminal 100 determines that the terminal 100 is not in the beam area of the beam corresponding to the historical camping information item. The terminal 100 may determine, based on whether the terminal 100 is in the coverage area of the beam corresponding to the historical camping information item, whether to camp on the satellite network based on the historical camping information item.

Optionally, the historical camping information item may further include a satellite identity (identity, ID). The satellite ID may indicate a satellite to which a center frequency on which the terminal that provides the historical camping information camps belongs. The satellite ID may be used by the terminal 100 to check, when the terminal 100 camps on a center frequency, whether the terminal 100 camps on an appropriate center frequency provided by the satellite. In some examples, when the terminal 100 sends/receives a satellite message, to improve signal strength, the terminal 100 needs to align with a direction in which the satellite is located in a communication process. The satellite ID may further help the terminal 100 perform satellite alignment. When the satellite is a geostationary orbit (geostationary orbit, GEO) satellite, the geostationary orbit satellite is stationary relative to the earth, and the terminal 100 may directly determine a location of the GEO satellite based on the satellite ID. When the satellite is a low earth orbit (low earth orbit, LEO) satellite, because the low earth orbit satellite is displaced relative to the earth, the terminal 100 may determine, based on prestored ephemeris information and the satellite ID, whether the terminal 100 can receive, at a current location, a signal of a satellite corresponding to the satellite ID.

In some examples, the satellite ID may further notify the terminal 100 whether a frequency division multiplexing technology or a code division multiplexing technology is used by the satellite to transmit a satellite signal. In addition, when the satellite transmits a satellite signal by using the code division multiplexing technology, the terminal 100 may store a correspondence between the satellite ID and a code division sequence. The terminal 100 may determine the code division sequence of the satellite based on the correspondence and the satellite ID.

Optionally, the historical camping information item may further include a beam ID. The beam ID may indicate a beam to which a center frequency on which the terminal that provides the historical camping information camps belongs. Because a frequency range provided for satellite communication is limited, beams in different coverage areas may use a same center frequency. Therefore, the terminal 100 may determine, based on the beam ID, whether a center frequency on which the terminal 100 camps is correct.

Optionally, the historical camping information item may further include a PLMN accessed by the terminal that provides the historical camping information. The terminal 100 may determine, based on the PLMN in the historical camping information, whether the terminal 100 can access the PLMN. When the PLMN in the historical camping information is a PLMN provided by an operator to which an SIM card of the terminal 100 belongs, or may be a PLMN provided by another operator that has a cooperation relationship with the operator that provides the SIM card, the terminal 100 may access the PLMN.

The beam coverage information includes one or more beam coverage information items. The beam coverage information item may include but is not limited to location information of a beam center location and center frequency information. Each beam coverage information item includes information about one center frequency in one beam of one satellite. The location information of the beam center location indicates a center location of a beam corresponding to the beam coverage information item. The center frequency information indicates a frequency range of the beam.

The terminal 100 may search the beam coverage information for one or more beam coverage information items in which beam center locations are closest to the location of the terminal 100, and camp on the satellite network based on the one or more beam coverage information items.

Optionally, the beam coverage information item may further include a satellite ID, and/or a beam ID, and/or a PLMN. For specific descriptions of the information, refer to the descriptions of the corresponding information in the foregoing historical camping information. Details are not described herein again.

After the terminal 100 obtains the historical camping information and the beam coverage information in the cellular network, after the terminal 100 is disconnected from the cellular network, the terminal 100 may perform an operation of camping on the satellite network based on the historical camping information and the beam coverage information. For details, refer to step S302 to step S307.

S302: The terminal 100 determines one or more historical camping information items in the historical camping information based on the location of the terminal 100 and the location at which the terminal is located during camping in the historical camping information, where the one or more historical camping information items include a specified historical camping information item.

After receiving an input for accessing the satellite network, the terminal 100 may start to perform step S302. For specific descriptions of the input, refer to the foregoing step S101. Details are not described herein again. Alternatively, the terminal 100 may perform step S302 after disconnecting from the cellular network, or when no cellular network signal is detected within preset duration (for example, 3 minutes).

Specifically, when performing a network selection operation according to the network selection method provided in this embodiment of this application, the terminal 100 may first obtain a location of the terminal 100 through positioning. The terminal 100 may search, based on the location of the terminal 100, for one or more historical camping information items in which camping locations are closest to the location of the terminal 100 in each historical camping information item of the historical camping information. After finding one or more historical camping information items, the terminal 100 may perform step S303. For example, the terminal 100 may determine one or more historical camping information items based on the location of the terminal 100 and the beam center location in the historical camping information item, where a distance between the camping location in the one or more historical camping information items and the location of the terminal 100 is less than a first preset distance.

In some examples, the terminal 100 may store a preset distance threshold. The terminal 100 may first search the historical camping information for a historical camping information item in which a distance between the location at which the terminal 100 is located during camping and the location of the terminal 100 is less than the preset distance threshold. Then, one or more historical camping information items in which the location at which the terminal 100 is located during camping is closest to the location of the terminal 100 are determined from the historical camping information items. It may be understood that, when the terminal 100 determines that the distance between the location at which the terminal 100 is located during camping in the historical camping information and the location of the terminal 100 is greater than the preset distance threshold, the terminal 100 may determine, based on the location of the terminal 100 and the beam center location in the beam coverage information, one or more beam coverage information items in the beam coverage information, and perform an operation of camping on a center frequency of the one or more beam coverage information items. In this way, the terminal 100 does not perform an operation of camping on a center frequency that is far away from the terminal 100 when there is no center frequency that is close to the terminal 100 in the historical camping information.

Optionally, the historical camping information item includes time of camping on the satellite network. The terminal 100 may determine, from the historical camping information, a historical camping information item in which a time difference between the time of camping on the satellite network in the historical camping information item and system time of the terminal 100 is less than a preset time difference and a distance between a camping location and the location of the terminal 100 is less than the first preset distance. The terminal 100 may camp on the satellite network based on the one or more historical camping information items.

Optionally, the historical camping information item includes a satellite ID and ephemeris information. The terminal 100 may determine, from the historical camping information, a historical camping information item in which a coverage area of a beam corresponding to the satellite ID in the one or more historical camping information items includes the location of the terminal 100 and a distance between the camping location and the location of the terminal 100 is less than the first preset distance. The terminal 100 may camp on the satellite network based on the one or more historical camping information items.

Optionally, the historical camping information item includes a PLMN. The terminal 100 may determine, from the historical camping information, a historical camping information item that is in the one or more historical camping information items and in which a PLMN belongs to the PLMN supported by the SIM card of the terminal 100 and a distance between the camping location and the location of the terminal 100 is less than the first preset distance. The terminal 100 may camp on the satellite network based on the one or more historical camping information items.

It may be understood that the terminal 100 may determine the one or more historical camping information items based on the location of the terminal 100 and the camping location in the historical camping information item. Alternatively, the terminal 100 may jointly determine the one or more historical camping information based on the beam center location in the historical camping information item, and/or the time of camping on the satellite network in the historical camping information item, and/or the ephemeris information and the satellite ID in the historical camping information item, and/or the PLMN provided by the SIM card and the PLMN in the historical camping information item.

In some examples, if the terminal 100 does not find the one or more historical camping information items in the stored historical camping information, the terminal 100 may determine, based on the location of the terminal 100 and the beam center location of each beam coverage information item in the beam coverage information, one or more beam coverage information entries in the beam coverage information, and perform an operation of camping on a center frequency of the one or more beam coverage information items. For details, refer to the descriptions in step S305. Details are not described herein again.

S303: The terminal 100 performs, based on the system message in the one or more historical camping information items, an operation of camping on a center frequency in the historical camping information item.

The terminal 100 may perform an operation of camping on the center frequency of the one or more historical camping information items.

Specifically, the terminal 100 may adjust a receive frequency range to the frequency range indicated by the camping center frequency information in the historical camping information item, and then detect signal strength of a satellite signal received at the center frequency. When the signal strength of the satellite signal is lower than preset signal strength, the terminal 100 may perform an operation of camping on a center frequency of a next historical camping information item.

When detecting that the signal strength of the satellite signal received at the center frequency is higher than the preset signal strength, the terminal 100 may camp on the center frequency corresponding to the historical camping information item based on the system message in the historical camping information item. The terminal 100 may obtain the RACH access parameter based on the system message class 1, to perform an uplink synchronization operation. The terminal 100 may obtain downlink synchronization information based on the system message class 2, to implement frequency synchronization and frame synchronization with satellite downlink data. The terminal 100 may further obtain signal strength information of an adjacent beam based on the system message class 2. When signal strength of the adjacent beam is stronger than signal strength of a current beam, the terminal 100 may camp on a center frequency of the adjacent beam based on a historical camping information item of the adjacent beam. The terminal 100 may obtain information like the beam center location and the PLMN based on the system message class 3, select the appropriate PLMN based on the system message class 3, and successfully camp on the center frequency corresponding to the historical camping information item. The terminal 100 may further obtain the center frequency information list based on the system message class 4.

When the terminal 100 fails to camp on the center frequency corresponding to the historical camping information item, the terminal 100 may camp on the satellite network based on next historical camping information in the historical camping information item. In this way, it is convenient for the terminal 100 to successfully camp on the satellite network based on the stored system message of the historical camping information item, so that time for the terminal 100 to receive the system message is reduced.

In some examples, after the terminal 100 fails to camp on a historical camping information item, to eliminate impact of a center frequency camping failure caused by a system message update, the terminal 100 may receive the system message class 1 at the center frequency. The terminal 100 may parse the system message class 1, to obtain the version number of the system message class 2 and the version number of the system message class 3.

The terminal 100 may determine, based on the version number of the system message class 2 in the received system message class 1 and the version number of the system message class 2 in the historical camping information item, whether to receive the system message class 2 at the center frequency.

When the version number of the system message class 2 in the received system message class 1 is the same as the version number of the system message class 2 in the historical camping information item, the terminal 100 does not need to receive the system message class 2 at the center frequency. In addition, because the system message class 2 is not updated, the version number of the system message class 4 in the system message class 2 remains unchanged, and the terminal 100 does not need to receive the system message class 4 at the center frequency.

When the version number of the system message class 2 in the received system message class 1 is different from the version number of the system message class 2 in the historical camping information item, the terminal 100 needs to receive the system message class 2 at the center frequency. Then, the terminal 100 needs to determine, based on the version number of the system message class 4 in the received system message class 2 and the version number of the system message class 4 in the historical camping information item, whether the system message class 4 at the center frequency needs to be received. For details, refer to the descriptions of determining, by the terminal 100, whether to receive the system message class 2. Details are not described herein again.

Similarly, for specific descriptions of determining, by the terminal 100 based on the version number of the system message class 3 in the received system message class 1 and the version number of the system message class 3 in the historical camping information item, the terminal 100, whether the system message class 3 at the center frequency needs to be received, refer to the descriptions of determining, by the terminal 100, whether to receive the system message class 2. Details are not described herein again.

After updating the system message based on the foregoing steps, the terminal 100 may perform an operation of camping on the center frequency in the historical camping information item again based on an updated system message. If the terminal 100 successfully camps on the center frequency, the terminal 100 may perform step S304. If the terminal 100 fails to camp on the center frequency, the terminal 100 may perform step S305. It may be understood that, if the system message class 1 received by the terminal 100 is different from the system message class 1 in the historical camping information item, the terminal 100 may replace the received system message class 1 with the system message class 1 in the historical camping information item.

In some other examples, after failing to camp on the satellite network based on the one or more historical camping information items, the terminal 100 may receive, based on the camping center frequency in the historical camping information item, the system message delivered by the satellite network. In addition, the terminal camps on the satellite network based on the historical camping information item and the system message delivered by the satellite network. For descriptions of receiving the system message by the terminal 100, refer to the foregoing embodiments. Details are not described herein again.

In some examples, the historical camping information item includes time of camping on the satellite network. After the terminal 100 fails to camp on the satellite network based on the one or more historical camping information items, the terminal 100 may determine, based on whether a time difference between the time of camping on the satellite network in the one or more historical camping information items and the system time of the terminal 100 exceeds the preset time difference, whether to receive the system message from the satellite network based on the historical camping information item. When the terminal 100 determines that a time difference between time of camping on the satellite network in a historical camping information item and the system time of the terminal 100 exceeds the preset time difference, the terminal 100 may receive, based on a camping center frequency in the historical camping information item, the system message delivered by the satellite network. When the terminal 100 determines that a time difference between time of camping on the satellite network in a historical camping information item and the system time of the terminal 100 does not exceed the preset time difference, the terminal 100 may not receive, based on a camping center frequency in the historical camping information item, the system message delivered by the satellite network. In this way, after failing to camp on the satellite network based on the historical camping information item, the terminal 100 may determine, based on the time of camping on the satellite network in the historical camping information item, whether the system message in the historical camping information item is invalid. The terminal 100 receives, only when determining that the system message is invalid, the system message sent by the satellite network. This avoids a case in which the terminal 100 still receives the system message of the satellite network when the system message of the historical camping information item is valid, and reduces network camping time of the terminal 100.

After determining, based on the foregoing steps, that the system message does not need to be updated, the terminal 100 may directly perform step S305.

Specifically, for descriptions of camping on the satellite network by the terminal 100, refer to the embodiment shown in FIG. 1. Details are not described herein again.

S304: The terminal 100 successfully camps on a center frequency in the specified historical camping information item, and communicates with another terminal through the satellite network.

If the terminal 100 successfully camps on the center frequency, the terminal 100 may communicate with another terminal (for example, the terminal 400 or the terminal 500) at the center frequency through the satellite.

S305: The terminal 100 fails to camp on the center frequency in the one or more historical camping information items, and the terminal 100 determines one or more beam coverage information items in the beam coverage information based on the location of the terminal 100 and the beam center location in the beam coverage information, where the one or more beam coverage information items include a specified beam coverage information item.

If the terminal 100 fails to camp on all center frequencies in the one or more historical camping information items, the terminal 100 may search for one or more beam coverage information items in which beam center locations are closest to the location of the terminal 100 in the beam coverage information, and perform step S306 after finding the one or more beam coverage information items. For example, the terminal 100 may determine one or more beam coverage information items based on the location of the terminal 100 and the beam center location in the beam coverage information item, where a distance between the beam center location in the one or more beam coverage information items and the location of the terminal 100 is less than a second preset distance.

Optionally, the beam coverage information item includes a satellite ID. The terminal 100 may determine, from the beam coverage information, one or more beam coverage information items in which the beam coverage area corresponding to the satellite ID includes the location of the terminal 100 and the distance between the beam center location and the location of the terminal 100 is less than the second preset distance. The terminal 100 may camp on the satellite network based on the one or more beam coverage information items.

Optionally, the beam coverage information item includes a PLMN. The terminal 100 may determine, from the beam coverage information, one or more beam coverage information items in which a PLMN belongs to the PLMN supported by the SIM card of the terminal 100 and a distance between the beam center location and the location of the terminal 100 is less than the second preset distance. The terminal 100 may camp on the satellite network based on the one or more beam coverage information items.

It may be understood that the terminal 100 may determine the one or more beam coverage information items based on the location of the terminal 100 and the camping location in the beam coverage information item. Alternatively, the terminal 100 may determine the one or more beam coverage information based on the ephemeris information and the satellite ID in the beam coverage information item, and/or the PLMN provided by the SIM card and the PLMN in the beam coverage information item.

S306: The terminal 100 performs an operation of camping on a center frequency in the one or more beam coverage information items.

In this process, the terminal 100 needs to receive, at the center frequency provided by the beam coverage information item, the system message delivered by the satellite, and perform an operation of the camping on the center frequency based on the received system message.

In some examples, the terminal 100 stores only the beam coverage information. When performing the network selection procedure, the terminal 100 may determine, based on the location of the terminal 100 and the beam center location in the beam coverage information item, one or more beam coverage information items in which a beam center location is closest to the terminal 100. The terminal 100 may camp on the satellite network based on the one or more beam coverage information items.

S307: The terminal 100 successfully camps on a center frequency in the specified beam coverage information item, and communicates with another terminal through the satellite network.

S308: The terminal 100 fails to camp on the center frequency in the one or more beam coverage information items, and the terminal 100 obtains, based on the center frequency on which the terminal 100 fails to camp, a neighboring center frequency of the center frequency on which the terminal 100 fails to camp, and performs an operation of camping on the neighboring center frequency.

Herein, the center frequency on which the terminal 100 camps in step S302 and step S305 is a failed center frequency, and the terminal 100 may determine an adjacent center frequency of the failed center frequency. The adjacent center frequency is one or more center frequencies that are in all frequency bands and that are adjacent to a frequency range of the failed center frequency. For descriptions of performing, by the terminal 100, camping on the neighboring center frequency, refer to the embodiment shown in FIG. 1. Details are not described herein again.

S309: The terminal 100 successfully camps on the adjacent center frequency, and communicates with another terminal through the satellite network.

S310: The terminal 100 fails to camp on the adjacent center frequency, and performs a center frequency camping operation based on the preset center frequency information list.

For details, refer to the embodiment shown in FIG. 1. Details are not described herein again.

It should be noted that, after successfully camping on the satellite network, the terminal 100 may perform communication through the satellite network. After the terminal 100 accesses the cellular network or the wireless local area network, the terminal 100 may send, to the cloud server 200, data like location information of the terminal when the terminal successfully camps on the satellite network, a center frequency on which the terminal camps, and a system message received by the terminal.

After receiving data, that is sent by one or more terminals (for example, the terminal 100), like location information of the terminal when the terminal successfully camps on the satellite network, a center frequency on which the terminal camps, and a system message received by the terminal, the cloud server 200 sequentially sorts and stores the data as one or more historical camping information items based on time at which the data of the one or more terminals is received. In this way, the cloud server 200 may place a recently received historical camping information item at a forefront of all historical camping information items. When the terminal 100 camps on the satellite network, after one or more historical camping information items are selected from the historical camping information, the terminal 100 may sequentially camp on the satellite network based on an arrangement sequence of the historical camping information items. In this way, the terminal 100 may sequentially camp on the satellite network starting from the historical camping information item recently received by the cloud server 200. The recently received historical camping information is more reliable than other historical camping information received earlier, and the terminal is more likely to successfully camp on the satellite network based on the recently received historical camping information, so that network camping time is saved.

In some examples, the historical camping information may further include time at which network camping succeeds. The cloud server 200 may sort each historical camping information item based on the time at which network camping succeeds, place a historical camping information item with latest time at which network camping succeeds at a forefront of all historical camping information items, and place a historical camping information item with earliest time at which network camping succeeds at an end of all the historical camping information items.

It should be noted that, after successfully camping on a center frequency, the terminal 100 may receive a system message at the center frequency. Specifically, the terminal 100 may receive and parse a system message class 1 at the center frequency at an interval of preset duration (for example, 5 seconds). Then, the terminal determines, based on a version number of system message class 2 in the system message class 1, whether to receive the system message class 2 at the center frequency. The terminal determines, based on a version number of system message class 3 in the system message class 1, whether to receive the system message class 3 at the center frequency. After receiving and parsing the system message class 2 at the center frequency, the terminal 100 may determine, based on a version number of a system message class 4 in the system message class 2, whether to receive the system message class 4 at the center frequency. The terminal 100 may store a latest system message. In this way, the terminal 100 maintains a communication connection to the satellite network based on the latest system message. After the terminal 100 switches back to the cellular network, the terminal 100 may send the latest system message to the cloud server 200.

In some examples, the cloud server 200 may obtain, from the satellite operation server 300, a system message at each center frequency of each beam of each satellite. In this way, the cloud server 200 may always store a latest system message, so that the terminal accesses the satellite network based on information provided by the cloud server 200.

In some examples, the terminal 100 and the cloud server 200 may store the historical camping information and the beam coverage information in a form of a table. For example, a historical camping information table is shown in the following Table 1.

**Table 1: Historical camping information table**

| Location information of a beam center location | Location information of a camping location | Camping center frequency information | Satellite ID | Beam ID | PLMN | System message |
|---|---|---|---|---|---|---|
| Beam center location 1 | Camping location 1 | Center frequency 1 | Satellite ID 1 | Beam ID 1 | PLMN 1 | System message 1 |
| Beam center location 2 | Camping location 2 | Center frequency 2 | Satellite ID 2 | Beam ID 2 | PLMN 2 | System message 2 |

As shown in Table 1, the historical camping information table in the terminal 100 and the cloud server 200 includes one or more parameters. The one or more parameters may include but are not limited to location information of a beam center location, location information of a camping location, camping center frequency information, a satellite ID, a beam ID, a PLMN, and a system message. For descriptions of the one or more parameters, refer to the embodiment shown in FIG. 3. Details are not described herein again.

For example, when the terminal 100 is near a user location 1, the terminal 100 calculates distances between the terminal 100 and different camping locations based on a location of the terminal 100 and location information of a camping location in each entry in the historical camping information table. The terminal 100 determines that a camping location 1 in a first entry is closest to the terminal 100, and a distance between the location of the terminal 100 and the camping location 1 is less than a preset distance threshold. The terminal 100 may perform an operation of camping on a center frequency 1 based on a system message 1 in the first entry in Table 1 according to the network selection method shown in FIG. 3.

For example, a beam coverage information table is shown in the following Table 2.

**Table 2: Beam coverage information table**

| Location information of a beam center location | Center frequency information | Satellite ID | Beam ID | PLMN |
|---|---|---|---|---|
| Beam center location 1 | Center frequency 1 | Satellite ID 1 | Beam ID 1 | PLMN 1 |
| Beam center location 2 | Center frequency 2 | Satellite ID 2 | Beam ID 2 | PLMN 2 |

As shown in Table 2, the historical camping information table in the terminal 100 and the cloud server 200 includes one or more parameters. The one or more parameters may include but are not limited to location information of a beam center location, center frequency information, a satellite ID, a beam ID, and a PLMN. For descriptions of the one or more parameters, refer to the embodiment shown in FIG. 3. Details are not described herein again.

For example, when the terminal 100 is near a beam center location 1, the terminal 100 calculates distances between the terminal 100 and different beam center locations based on a location of the terminal 100 and location information of a beam center location in each entry in the beam coverage information table. The terminal 100 determines that a beam center location 1 in a first entry is closest to the terminal 100, and the terminal 100 may perform an operation of camping on a center frequency 1 according to the network selection method shown in FIG. 3.

It may be understood that Table 1 and Table 2 are merely examples, parameters in the historical camping information and the beam coverage information in the terminal 100 and the cloud server 200 are merely examples, and the historical camping information and the beam coverage information may include more or fewer parameters. The historical camping information and the beam coverage information are not limited to being represented in a form of a table. The terminal 100 and the cloud server 200 may alternatively show the historical camping information and the beam coverage information in another form (for example, an array). This is not limited in this embodiment of this application.

In a possible implementation, after receiving an input of the user for performing satellite communication, the terminal 100 may display a satellite alignment interface in response to the input. The satellite alignment interface may be used to prompt the user to align an antenna of the terminal 100 with the satellite. The terminal 100 may determine, based on the satellite ID in the satellite network selection information, an orientation of the to-be-aligned satellite. After determining that the antenna of the terminal 100 is aligned with the satellite, the terminal 100 may display a satellite communication interface. The satellite communication interface may be used to provide a user with a function like making/answering a satellite call. In this way, when the user performs a satellite communication operation through the terminal 100, the terminal 100 may determine, based on the satellite ID in the historical camping information and/or the beam coverage information, a direction in which the user aligns with the satellite, to help the user quickly align with a target satellite. After detecting that the user aligns the antenna of the terminal 100 with the target satellite, the terminal 100 may further quickly access the satellite network based on the historical camping information and/or the beam coverage information, so that the user can use the satellite communication function of the terminal 100 more quickly.

It should be noted that, when the target satellite with which the antenna of the terminal 100 is aligned is a GEO satellite, the terminal 100 needs to prompt, in a user communication process (sending or receiving a satellite message, or performing a satellite call), the user to align with the target satellite.

It should be further noted that, when the target satellite is a low-orbit satellite, because the low-orbit satellite is close to a ground, the terminal 100 may receive data delivered by the low-orbit satellite without performing a satellite alignment operation. Specifically, the terminal 100 may determine, based on ephemeris information of the low-orbit satellite, one or more low-orbit satellites whose beam coverage area includes a location of the terminal 100 within preset duration (for example, 5 minutes). The terminal 100 may display a satellite selection interface. The satellite selection interface includes one or more satellite icons, and the one or more satellite icons correspond to the one or more low-orbit satellites. In response to an input of the user for any satellite icon, the terminal 100 may perform an operation of camping on a center frequency of a low-orbit satellite corresponding to the satellite icon, and display a satellite communication interface after camping on a satellite network. It may be understood that the terminal 100 may determine, based on the satellite ID in the historical camping information item, one or more historical camping information items in which a satellite ID is the same as the satellite ID of the one or more low-orbit satellites in the historical camping information stored in the terminal 100, and perform an operation of camping on a center frequency corresponding to the historical camping information item. For specific descriptions of camping on the center frequency corresponding to the historical camping information item, refer to the foregoing embodiment. Details are not described herein again. It may be further understood that, when the terminal 100 fails to camp on the center frequency of the one or more low-orbit satellites based on the historical camping information item, the terminal 100 may determine, based on the satellite ID in the beam coverage information item, one or more beam coverage information items in which a satellite ID is the same as the satellite ID of the one or more low-orbit satellites in the stored beam coverage information, and perform an operation of camping on a center frequency corresponding to the beam coverage information item. For details, refer to the foregoing embodiment. Details are not described herein again. Similarly, when the terminal 100 fails to camp on the center frequency of the one or more low orbit satellites based on the beam coverage information item, the terminal 100 may obtain center frequency information provided by the one or more low orbit satellites in the preset center frequency information list, and perform an operation of camping on the center frequency of the one or more low orbit satellites. For details, refer to the embodiment shown in FIG. 1. Details are not described herein again.

In some examples, the terminal 100 needs to display prompt information used to prompt the user to align with the target satellite. Therefore, in a process in which the user makes a satellite call, the terminal 100 plays a sound of a contact in a hands-free mode through a speaker, or the terminal 100 may play a sound of a contact through a wireless/wired headset. In this way, the terminal 100 may prompt the user to make a radiation direction of the antenna of the terminal 100 toward a direction of the target satellite, to improve communication quality.

It should be further noted that the satellite communication interface may also be used to provide the user with a function of sending/receiving a satellite message. This is not limited in this embodiment of this application. For example, the satellite communication interface may provide an SMS message control and a phone control. The SMS message control may be used to trigger the terminal 100 to display an interface for sending/receiving a satellite message. The phone control may be used to trigger the terminal 100 to display an interface for making/answering a satellite call.

It should be further noted that a prerequisite for the terminal in the satellite network to make or answer a call is that the terminal is in a network camping state. When a call is made to the terminal in the satellite network, the satellite network sends a paging (paging) message to the terminal. The terminal may periodically parse the paging message delivered by the satellite network. If the terminal determines, after parsing the paging message, that the terminal is a target terminal of the paging message, the terminal may respond to the paging of the satellite network, and perform a call setup procedure. After establishing a call link, the terminal may communicate with the terminal of the contact. Before answering the satellite call, the terminal needs to perform operations such as satellite alignment and network camping. Therefore, the user of the terminal 100 and the contact may agree on call time in advance (for example, reserve the call time in advance through an SMS message or other communication software), and the terminal 100 may perform operations such as satellite alignment and network camping before the call time, to establish a communication link to the terminal of the contact. Alternatively, after camping on the satellite network, the terminal 100 may call the terminal of the contact, maintain a network camping state, and wait for the contact to call back. In this way, the terminal 100 may answer a satellite call in the satellite network.

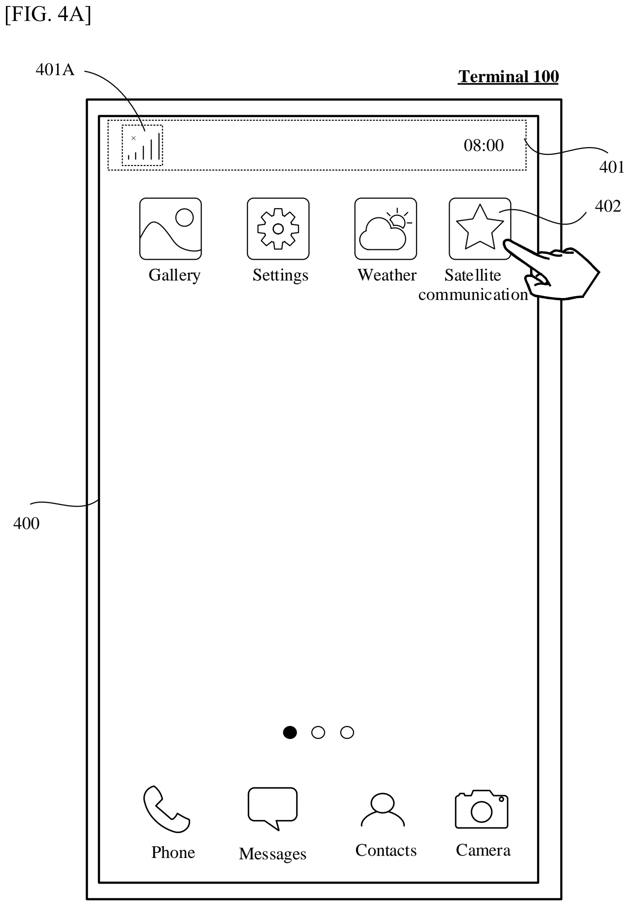

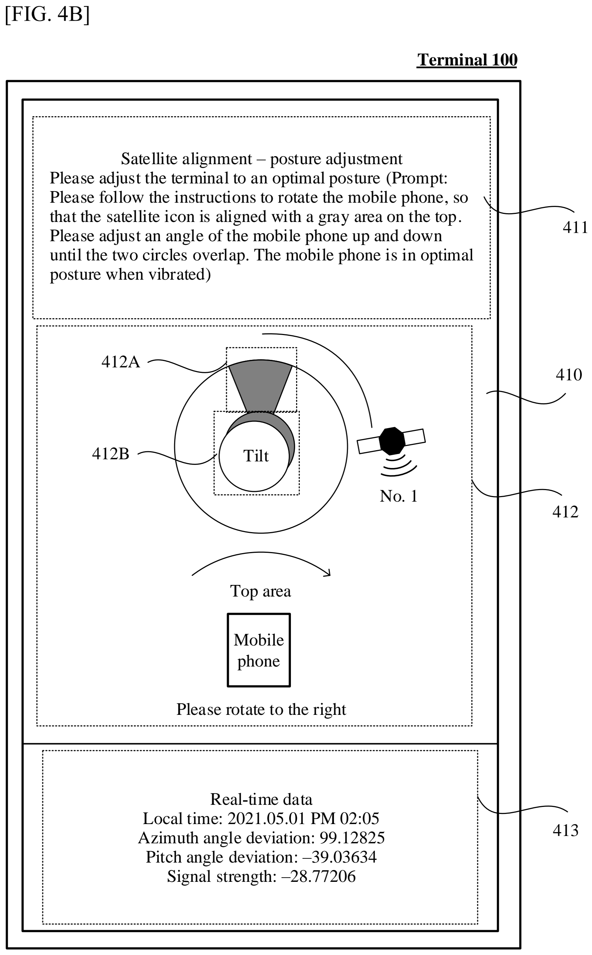

For example, as shown in FIG. 4A, the terminal 100 displays a home screen 400. The home screen 400 may include a plurality of application icons, for example, a satellite communication application icon 402. The satellite communication application icon 402 may be used to trigger display of an interface of a satellite communication application (for example, a satellite alignment interface 410 shown in FIG. 4B). The terminal 100 may send or receive a satellite message through the satellite communication application. The terminal 100 may further make/answer a satellite call through the satellite communication application.

A status bar 401 may be further displayed at the top of the home screen 400. A prompt icon 401A may be displayed in the status bar 401. The prompt icon 401A indicates that a communication connection between the terminal 100 and a cellular network is disconnected. In this case, the terminal 100 is in a no-cellular-signal state.

The terminal 100 receives an input (for example, a single tap) of the user for the satellite communication application icon 402. In response to the input, the terminal 100 may determine the one or more historical camping information items according to the network selection method shown in FIG. 3. The terminal 100 may determine the satellite transmission link direction of the target satellite based on the satellite ID and the beam ID in the historical camping information item. The terminal 100 may further determine the radiation direction of the antenna of the terminal 100 based on a sensor. For example, the terminal 100 may determine the radiation direction of the antenna of the terminal 100 by using one or more of sensors such as an inertial measurement unit (inertial measurement unit, IMU), an acceleration transducer (acceleration transducer, ACC), or a gyroscope sensor (gyroscope sensor, GYRO).

The terminal 100 may calculate a pitch angle difference between a pitch angle in the satellite transmission link direction and a pitch angle in the radiation direction of the antenna, and an azimuth angle difference between an azimuth angle in the satellite transmission link direction and an azimuth angle in the radiation direction of the antenna. When the pitch angle difference is greater than a first threshold or the azimuth angle difference is greater than a second threshold, the terminal 100 may display deviation prompt information. The deviation prompt information may be used to prompt the user to adjust a posture of the terminal 100. After the terminal 100 receives an input of adjusting the posture, in response to the input, the terminal 100 may perform the satellite alignment process again, and recalculate the pitch angle difference between the pitch angle in the satellite transmission link direction and the pitch angle in the radiation direction of the antenna, and the azimuth angle difference between the azimuth angle in the satellite transmission link direction and the azimuth angle in the radiation direction of the antenna.

The terminal 100 may detect in real time that the user adjusts the posture of the terminal 100, and calculate the azimuth angle deviation and the pitch angle deviation in real time until the azimuth angle difference is less than or equal to the first threshold and the pitch angle difference is less than or equal to the second threshold. When the azimuth angle difference is less than/equal to the first threshold and the pitch angle difference is less than/equal to the second threshold, the terminal 100 may display alignment prompt information, and display a dialing interface. The alignment prompt information may be used to prompt the user that the radiation direction of the satellite antenna in terminal 100 is already aligned with the target satellite. After the terminal 100 establishes a call connection to another terminal, the terminal 100 may send call data to the target satellite in the radiation direction of the antenna aligned with the target satellite, and/or the terminal 100 may receive, in the radiation direction of the antenna aligned with the target satellite, call data sent by the target satellite.

Herein, if the terminal 100 detects that the pitch angle difference is greater than the first threshold or the azimuth difference is greater than the second threshold, the terminal 100 may display the satellite alignment interface 410 shown in FIG. 4B.

As shown in FIG. 4B, the satellite alignment interface 410 may include but is not limited to prompt information 411, prompt information 412, and prompt information 413. The prompt information 411, the prompt information 412, and the prompt information 413 may be used to prompt the user to adjust the terminal 100 in a direction of reducing the azimuth angle deviation and the pitch angle deviation based on the prompt, so that the radiation direction of the satellite antenna in the terminal 100 is aligned with the target satellite. The prompt information 411 and the prompt information 413 may be text prompt information, and the prompt information 412 may include text prompt information and picture prompt information. For example, the prompt information 411 may be: "Please adjust the terminal to an optimal posture (Prompt: Please follow the instructions to rotate the mobile phone, so that the satellite icon is aligned with a gray area on the top. Please adjust an angle of the mobile phone up and down until the two circles overlap. The mobile phone is in optimal posture when vibrated)". The "gray area on the top" is content shown in an area 412A in the prompt information 412, and the "two circles" is content shown in an area 412B in the prompt information 412. The prompt information 412 may further include a manner in which the user adjusts the posture of the terminal. For example, text prompt information "Please rotate the mobile phone to the right" in the prompt information 412 may be used to prompt the user to rotate the terminal in a specified direction (for example, in a right-hand direction). The prompt information 413 may include but is not limited to real-time data of the terminal 100 during satellite alignment, for example, one or more of a local time, the azimuth angle deviation, the pitch angle deviation, and the signal strength. The local time is time of a city in which the terminal 100 is currently located. The azimuth angle deviation is the azimuth angle difference between the azimuth angle in the satellite transmission link direction and the azimuth angle in the radiation direction of the satellite antenna. The pitch angle deviation is the pitch angle difference between the pitch angle in the satellite transmission link direction and the pitch angle in the radiation direction of the satellite antenna. The signal strength is a strength of a signal that is of the target satellite and that is currently received by the terminal 100.

Optionally, the terminal 100 may display only the prompt information 412, or the terminal 100 may display only the prompt information 411 and the prompt information 412.

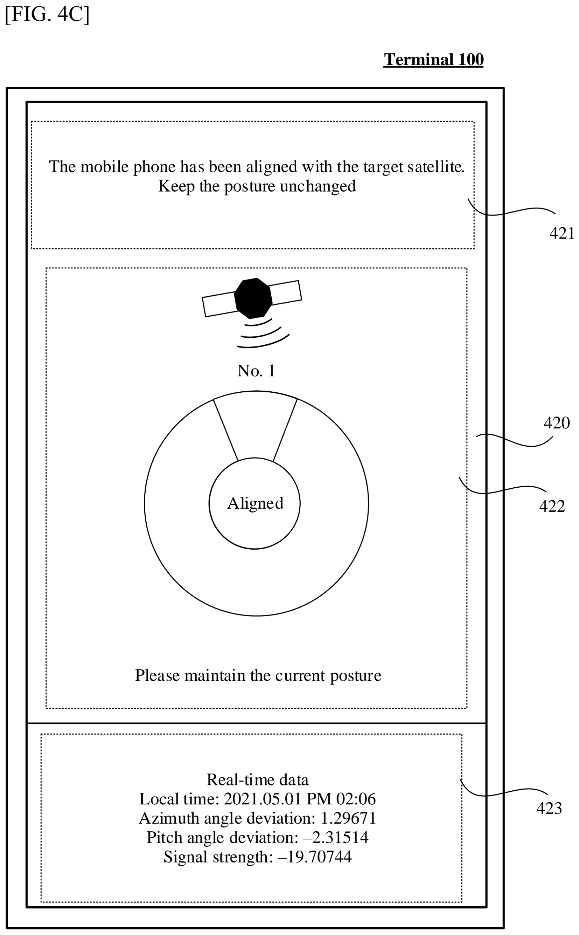

When the azimuth angle difference is greater than the first threshold or the pitch angle difference is greater than the second threshold, after receiving the input of the user for adjusting the posture of the terminal 100, the terminal 100 may perform the satellite alignment operation again in response to the input, and recalculate the pitch angle difference and the azimuth angle difference. The terminal 100 may update the display of the satellite icon in the prompt information 412 and the location of the area 412B on a display. The terminal 100 may update values of the pitch angle deviation and the azimuth angle deviation in the prompt information 413 that is displayed on the satellite alignment interface 410. The satellite alignment process may be cyclically implemented until the pitch angle difference is less than/equal to the second threshold and the azimuth angle difference is less than/equal to the first threshold. When the pitch angle difference is less than/equal to the second threshold and the azimuth angle difference is less than/equal to the first threshold, the terminal 100 may display a satellite alignment interface 420 shown in FIG. 4C.

As shown in FIG. 4C, the satellite alignment interface 420 is an interface of successful satellite alignment provided by the terminal 100. The interface 420 includes prompt information 421, prompt information 422, and prompt information 423. The prompt information 421 may be used to prompt the user that the satellite alignment is already completed, but the user needs to maintain the current posture, so that sending of the first data packet is not affected. The prompt information 423 may be used to prompt the user of the real-time data of the terminal 100 (for example, the strength of the signal received from the target satellite, and the azimuth angle deviation). The prompt information 421 and the prompt information 422 may be text prompt information. The prompt information 421 may be: "The mobile phone is already aligned with the target satellite. After being vibrated, the mobile phone will send and receive satellite short messages. Keep the posture unchanged". The prompt information 422 may include picture prompt information and text prompt information. The prompt information 422 includes a diagram in which the radiation direction of the satellite antenna is aligned with the target satellite after successful satellite alignment.

After successful satellite alignment, the terminal 100 may perform an operation of camping on the center frequency of the beam. After the terminal 100 fails to camp on the center frequency, if the terminal 100 determines a plurality of historical camping information items, the terminal 100 may prompt the user to align the radiation direction of the antenna with a satellite transmission link direction of a next historical camping information item, and camp on a center frequency of the historical camping information item after successful satellite alignment. The rest may be deduced by analogy. After determining that the terminal 100 fails to camp on center frequencies of all historical camping information items, the terminal 100 may determine one or more beam coverage information items according to the network selection method shown in FIG. 3. The terminal 100 may align the radiation direction of the antenna with the satellite transmission link direction of the beam coverage information item, and camp on a center frequency of the beam coverage information item after successful satellite alignment. The rest may be deduced by analogy. It may be understood that, in a satellite alignment process, the terminal 100 may display a corresponding satellite alignment interface. Details are not described herein again.

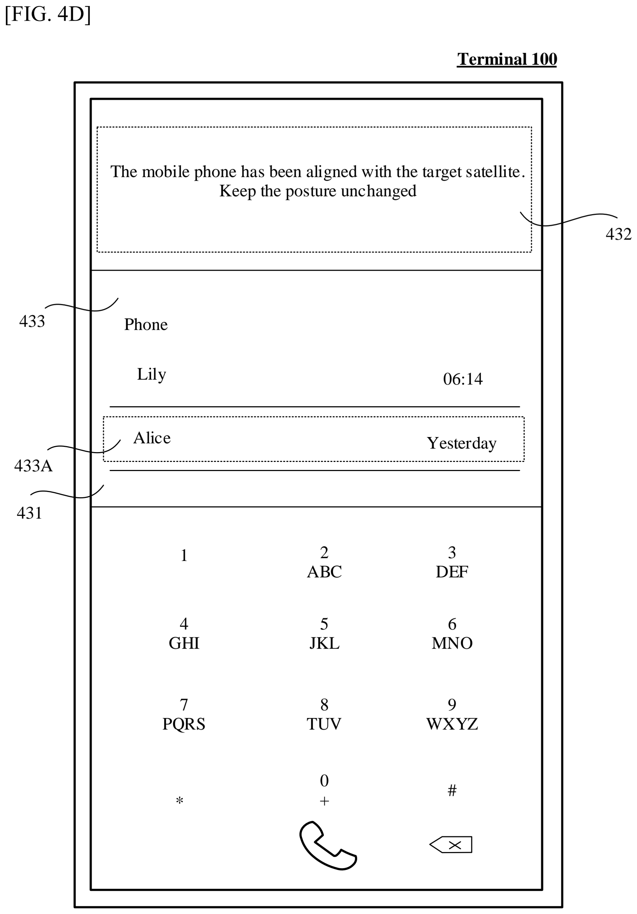

After the terminal 100 successfully camps on the center frequency, the terminal 100 may display a dialing interface 431 shown in FIG. 4D. As shown in FIG. 4D, the dialing interface 431 may include but is not limited to prompt information 432, a dialing area 433, and the like. The prompt information 432 may be used to prompt the user to keep a current posture unchanged. For example, the prompt information 432 may be text prompt information: "The mobile phone has been aligned with the target satellite. Keep the posture unchanged". The dialing area 433 may be used to provide a dialing function for the user. The dialing area 433 may include but is not limited to one or more call records and a dialing button area. The one or more call records may be used to trigger the terminal 100 to dial a corresponding contact, and the one or more call records include a call record 433A. The dialing button area may be used to receive an input of the user, and enter and dial a number of a contact.

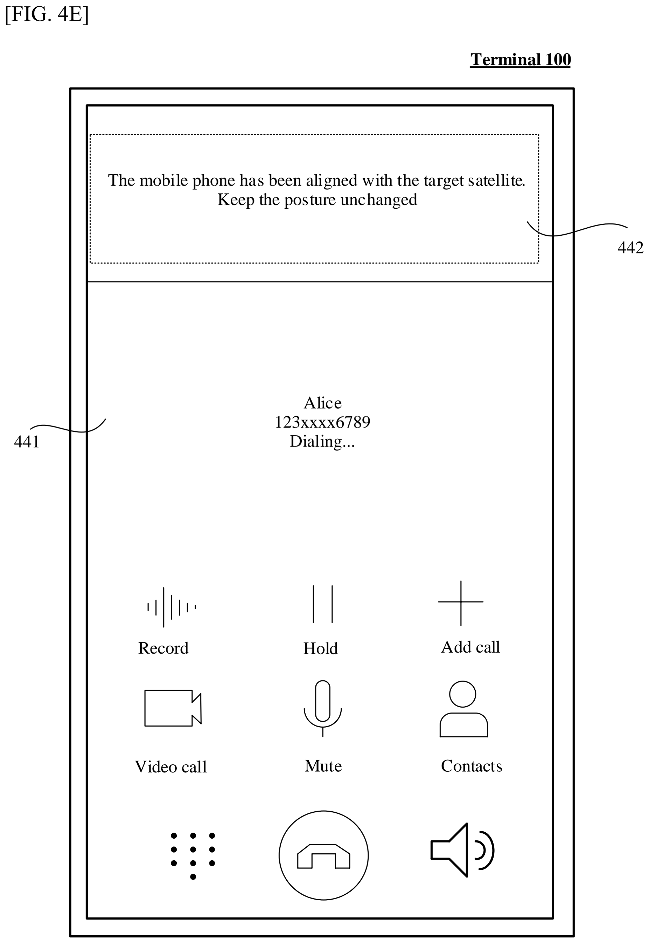

The terminal 100 may receive an input of the user for the call record 433A, and display, in response to the input, a call interface 441 shown in FIG. 4E. As shown in FIG. 4E, the call interface 441 may be used to perform phone communication with a contact "Alice". The call interface 441 may include prompt information 442. For descriptions of the prompt information 442, refer to the descriptions of the prompt information 432. Details are not described herein again.

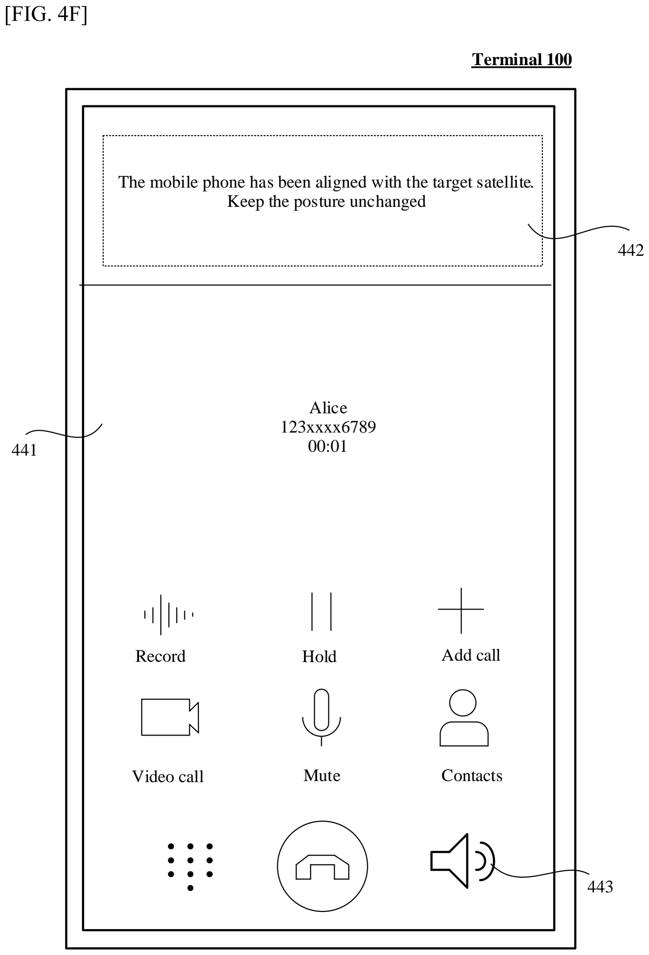

After a terminal (for example, the terminal 400 or the terminal 500) of the contact "Alice" receives an input of the contact "Alice" and answers the call initiated by the terminal 100, the terminal of the contact "Alice" may establish a call connection to the terminal 100. After establishing a call connection to the terminal of the contact "Alice", the terminal 100 may display a dialing interface 441 shown in FIG. 4F.

As shown in FIG. 4F, the dialing interface 441 includes prompt information 442 and a hands-free icon 443. The hands-free icon 443 may be used to prompt the user to make the call in a hands-free mode.

It should be noted that, when the terminal 100 establishes a wired connection to a wired headset, the terminal 100 may not display the hands-free icon 443 on the dialing interface 441 shown in FIG. 4F, and the terminal 100 may display a headset icon at the hands-free icon 443, where the headset icon may be used to prompt the user to make the call through the wired headset. Similarly, when the terminal 100 establishes a communication connection (for example, a Bluetooth connection) to a wireless headset, the terminal 100 may not display the hands-free icon 443 on the dialing interface 441 shown in FIG. 4F, and the terminal 100 may display a Bluetooth icon at the hands-free icon 443, where the Bluetooth icon may be used to prompt the user to make the call through the wireless headset.

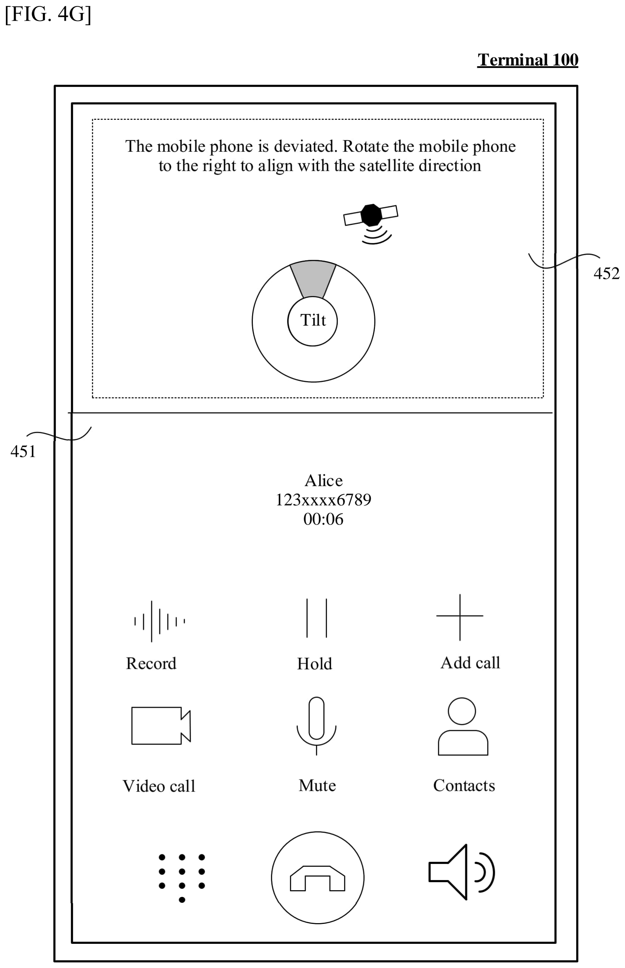

In a process in which the terminal 100 maintains the call connection to the terminal of the contact "Alice", if the terminal 100 detects that the radiation direction of the antenna changes, and the azimuth difference is greater than the first threshold or the pitch angle difference is greater than the second threshold, the terminal 100 may display a dialing interface 451 shown in FIG. 4G.

As shown in FIG. 4G, the dialing interface 451 may include prompt information 452. The prompt information 452 may be used to prompt the user to align the radiation direction of the antenna with the satellite transmission link direction of the satellite. For example, the prompt information 452 may include text prompt information: "The mobile phone is deviated. Rotate the mobile phone to the right to align with the satellite direction". The prompt information 452 may further include animation prompt information, and the animation prompt information may more intuitively indicate an orientation of the satellite, as shown in FIG. 4G.

It may be understood that, after the terminal 100 detects that the radiation direction of the antenna is aligned with the satellite transmission link direction of the satellite, that is, the pitch angle difference is less than/equal to the second threshold and the azimuth difference is less than/equal to the first threshold, the terminal 100 may cancel displaying the prompt information 452 on the dialing interface 451 shown in FIG. 4G, and display the prompt information 442 shown in FIG. 4F.

It should be noted that this is not limited to the satellite communication application icon 402. The terminal 100 may alternatively trigger, based on a satellite communication control in a drop-down menu bar, the terminal 100 to enable the satellite communication function. Then, after enabling the satellite communication function, the terminal 100 may display the satellite alignment interface 410 shown in FIG. 4B after receiving an input of the user for the dialing application icon. After detecting that the radiation direction of the antenna of the terminal 100 is aligned with the target satellite, the terminal 100 may display the dialing interface 431 shown in FIG. 4D. Similarly, after enabling the satellite communication function, the terminal 100 may display the satellite alignment interface 410 shown in FIG. 4B after receiving an input of the user for the information application icon. After detecting that the radiation direction of the antenna of the terminal 100 is aligned with the target satellite, the terminal 100 may display an information interface used to send or receive a satellite message.

The following describes a terminal 100 according to an embodiment of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

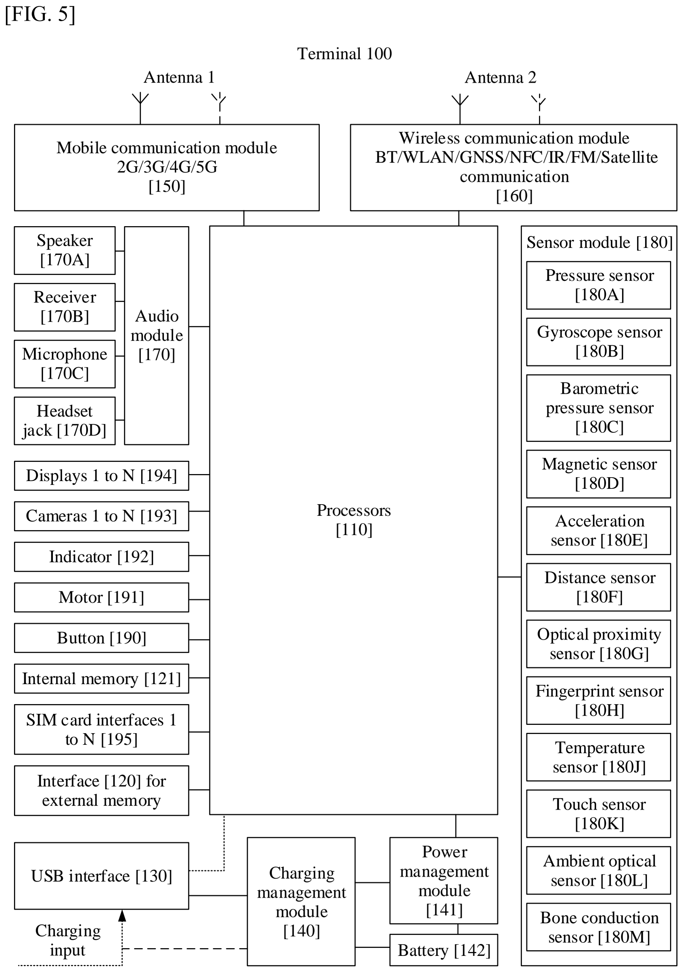

FIG. 5 is a diagram of a hardware structure according to an embodiment of this application.

The following specifically describes embodiments by using the terminal 100 as an example. It should be understood that the terminal 100 shown in FIG. 5 is merely an example. The terminal 100 may have more or fewer components than those shown in FIG. 5, or may combine two or more components, or may have different component configurations. The various components shown in FIG. 5 may be implemented in hardware including one or more signal processing circuits and/or application-specific integrated circuits, software, or a combination thereof.

The terminal 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It may be understood that an illustrated structure in this embodiment of the present invention does not constitute a specific limitation on the terminal 100. In some other embodiments of this application, the terminal 100 may include more or fewer components than those shown in the figure, or a combination of some components, or splits from some components, or a different component layout. The components shown in the figure may be implemented by using hardware, software, or a group of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in embodiments of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 supplies power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least a filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

The satellite communication module may be configured to process a signal sent by the terminal 100 to the satellite. The satellite communication module may be further configured to process a signal from the satellite. The terminal 100 may communicate with another terminal through a satellite network. For example, in the communication system 10, the satellite communication module may be configured to communicate with the terminal 400 and/or the terminal 500 through the satellite network.

In some embodiments, the antenna 1 and the mobile communication module 150 in the terminal 100 are coupled, and the antenna 2 and the wireless communication module 160 in the terminal 100 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100 may include 1 or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a center frequency, the digital signal processor is configured to perform Fourier transformation on center frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal 100 may be implemented through the NPU, for example, image recognition, facial recognition, speech recognition, and text understanding.

The interface 120 for external memory may be used to connect to an external memory card, for example, a micro SD card, to extend a storage capability of the terminal 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (such as audio data and an address book) created during use of the terminal 100, and the like. In addition, the internal memory 121 may include a high-speed random access memory, or may include a nonvolatile memory, for example, at least one magnetic disk storage device, a flash memory, or a universal flash storage (universal flash storage, UFS).

The terminal 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an electrical audio signal into a sound signal. When a call is answered or speech information is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal.

The gyroscope sensor 180B may be configured to determine a motion posture of the terminal 100. In some embodiments, angular velocities of the terminal 100 around three axes (namely, x, y, and z axes) may be determined by using the gyroscope sensor 180B.

The barometric pressure sensor 180C is configured to measure barometric pressure. In some embodiments, the terminal 100 calculates an altitude based on a barometric pressure value measured by the barometric pressure sensor 180C, to assist in positioning and navigation. The magnetic sensor 180D includes a Hall sensor.

The acceleration sensor 180E may detect magnitudes of accelerations of the terminal 100 in various directions (usually on three axes). When the terminal 100 is still, a magnitude and a direction of gravity may be detected. The acceleration sensor 180E may be further configured to identify a posture of the electronic device.

The terminal 100 may perform a satellite alignment operation via the gyroscope sensor 180B and/or the acceleration sensor 180E, so that the antenna of the terminal 100 is aligned with a satellite direction, and a success rate of sending/receiving a signal by the terminal 100 is improved.

The distance sensor 180F is configured to measure a distance. The terminal 100 may measure the distance in an infrared manner or a laser manner. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, so that the SIM card is in contact with and separated from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The terminal 100 interacts with a network by using the SIM card, to implement functions such as conversation and data communication. In some embodiments, the terminal 100 uses an eSIM, that is, an embedded SIM card. The eSIM card may be embedded into the terminal 100, and cannot be separated from the terminal 100.

In embodiments of this application, the terminal 100 may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose computer or a special-purpose computer.

All or some of the foregoing embodiments may be implemented through software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A network selection method in a satellite communication system, comprising: obtaining, by a terminal, location information of the terminal after disconnecting from a cellular network;
determining, by the terminal based on the location information of the terminal and historical camping information of a satellite network, M historical camping information items in the historical camping information, wherein the historical camping information comprises a plurality of historical camping information items, the historical camping information item comprises location information of camping on the satellite network, a camping center frequency of the satellite network, and a system message of the satellite network, distances between locations that are of camping on the satellite network and that are in the M historical camping information items and a location of the terminal are less than a first distance, and M is greater than or equal to 1; and
camping, by the terminal, on the satellite network based on system messages and camping center frequencies in the M historical camping information items.

2. The method according to claim 1, wherein the method further comprises:
before disconnecting from the cellular network, obtaining, by the terminal, the historical camping information of the satellite network from a server through the cellular network and/or a wireless local area network.

3. The method according to claim 1 or 2, wherein the M historical camping information items comprise a first historical camping information item; and the method further comprises:
displaying, by the terminal, a first interface, wherein the first interface comprises a satellite corresponding to the first historical camping information item, and a pitch angle deviation and an azimuth deviation between a radiation direction of an antenna in the terminal and a satellite transmission link direction, and the satellite transmission link direction is a direction from the location in which the terminal is located to a location in which the satellite is located;
receiving, by the terminal, a first input for adjusting a posture of the terminal; and
when the terminal determines that the radiation direction of the antenna is aligned with a target satellite, camping, by the terminal, on the satellite network based on a first system message and a first camping center frequency in the first historical camping information item.

4. The method according to claim 3, wherein the method further comprises:
after successfully camping on the satellite network, displaying, by the terminal, a second interface, wherein the second interface comprises a dialing button used to make a satellite call.

5. The method according to any one of claims 1 to 4, wherein the M historical camping information items comprise the first historical camping information item and a second historical camping information item; and camping, by the terminal, on the satellite network based on the system messages and the camping center frequencies in the M historical camping information items specifically comprises:
if the terminal fails to camp on the satellite network based on the first system message and the first camping center frequency in the first historical camping information item, camping, by the terminal, on the satellite network based on a second system message and a second center frequency in the second historical camping information item.

6. The method according to any one of claims 1 to 5, wherein the method further comprises:
if the terminal fails to camp on the satellite network based on the system messages and the camping center frequencies in the M historical camping information items, receiving a system message delivered by the satellite network; and
camping on the satellite network based on the system message delivered by the satellite network and the camping center frequencies in the M historical camping information items.

7. The method according to claim 6, wherein the system message comprises a first-type message, a second-type message, a third-type message, and a fourth-type message, the first-type message comprises a version number of the second-type message and a version number of the third-type message, and the second-type message comprises a version number of the fourth-type message; and
receiving the system message delivered by the satellite network specifically comprises:
after the terminal receives the first-type message delivered by the satellite network, if the terminal determines, based on the system message in the historical camping information item and the first-type message delivered by the satellite network, that a version number of a second-type message in the historical camping information item is different from the version number of the second-type message in the first-type message delivered by the satellite network, receiving, by the terminal, the second-type message delivered by the satellite network;
if the terminal determines, based on the system message in the historical camping information item and the first-type message delivered by the satellite network, that a version number of a third-type message in the historical camping information item is different from the version number of the third-type message in the first-type message delivered by the satellite network, receiving, by the terminal, the third-type message delivered by the satellite network; and
after the terminal receives the second-type message delivered by the satellite network, if the terminal determines, based on the system message in the historical camping information item and the second-type message delivered by the satellite network, that a version number of a fourth-type message in the historical camping information item is different from the version number of the fourth-type message in the second-type message delivered by the satellite network, receiving, by the terminal, the fourth-type message delivered by the satellite network.

8. The method according to any one of claims 1 to 7, wherein the historical camping information item comprises time of the camping center frequency; and a time difference between time of the camping center frequencies in the M historical camping information items and system time of the terminal is less than a preset time difference.

9. The method according to any one of claims 1 to 8, wherein the M historical camping information items comprise the first historical camping information item and the second historical camping information item; the historical camping information item further comprises a beam coverage center location; and the method further comprises:
when a distance between the location of the terminal and a beam coverage center location corresponding to the first historical camping information item is greater than a preset coverage distance, failing, by the terminal, to camp on the satellite network based on the first historical camping information item, and determining whether a distance between the location of the terminal and a beam coverage center location corresponding to the second historical camping information item is less than the preset coverage distance; and
when the distance between the location of the terminal and the beam coverage center location corresponding to the second historical camping information item is less than the preset coverage distance, camping on the satellite network based on the second historical camping information item.

10. The method according to any one of claims 1 to 9, wherein the historical camping information item further comprises a satellite identity, and coverage areas of beams corresponding to satellite identities in the M historical camping information items comprise the location of the terminal.

11. The method according to any one of claims 1 to 10, wherein the historical camping information item further comprises a public land mobile network PLMN, and PLMNs in the M historical camping information items belong to a PLMN provided by an operator for a subscriber identity module SIM card of the terminal.

12. The method according to any one of claims 1 to 11, wherein the method further comprises:
if the terminal fails to camp on the camping center frequencies in the M historical camping information items, determining, based on the location information of the terminal and beam coverage information of the satellite network, N beam coverage information items in the beam coverage information, wherein the beam coverage information comprises a plurality of beam coverage information items, and the beam coverage information item comprises a beam center location and a camping center frequency; and distances between beam center locations in the N beam coverage information items and the location of the terminal are less than a second distance, and N is greater than or equal to 1; and
camping, by the terminal, on the satellite network based on camping center frequencies of the N beam coverage information items.

13. The method according to claim 12, wherein the method further comprises: before disconnecting from the cellular network, obtaining, by the terminal, the beam coverage information of the satellite network from the server through the cellular network and/or the wireless local area network.

14. The method according to claim 12 or 13, wherein the N beam coverage information items comprise a first beam coverage information item; and camping, by the terminal, on the satellite network based on the camping center frequencies of the N beam coverage information items specifically comprises:
receiving, by the terminal, a third system message of the satellite network at a third center frequency of the first beam coverage information item; and
camping, by the terminal, on the satellite network based on the third system message.

15. The method according to any one of claims 12 to 14, wherein the method further comprises:
if the terminal fails to camp on the camping center frequencies of the N beam coverage information items, camping, by the terminal, on the satellite network based on a preset center frequency information list, wherein the preset center frequency information list comprises a plurality of center frequencies of the satellite network.

16. The method according to any one of claims 1 to 15, wherein the method further
comprises:
storing, by the terminal, location information of the terminal, a camping center frequency of the terminal, and a system message received by the terminal when the terminal successfully camps on the satellite network; and
after accessing the cellular network or the wireless local area network, sending, by the terminal to the server, the location information of the terminal, the camping center frequency of the terminal, and the system message received by the terminal when the terminal successfully camps on the satellite network.

17. A communication apparatus, comprising one or more processors, one or more memories, and a transceiver, wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 16.

18. A computer-readable storage medium, wherein the computer-readable storage medium stores instructions, and when the instructions are run on a computer, the computer is enabled to perform the method according to any one of claims 1 to 16.

19. A chip, used in a terminal, comprising a processing circuit and an interface circuit, wherein the interface circuit is configured to: receive code instructions, and transmit the code instructions to the processing circuit, and the processing circuit is configured to run the code instructions to perform the method according to any one of claims 1 to 16.
